# EUROPÄISCHE PATENTANMELDUNG

(11) **EP 3 855 617 A1**
(43) Veröffentlichungstag der Anmeldung: **28.07.2021**
(21) Anmeldenummer: 21153791.5
(22) Anmeldetag: 27.01.2021
(51) Int. Cl.: H02S 20/22

(54) **KERAMIKFASSADE MIT PHOTOVOLTAIK**

(30) Priorität: 27.01.2020 DE 102020101900; 13.07.2020 DE 102020118398
(71) Anmelder: Moeding Keramikfassaden GmbH, 84163 Marklkofen (DE)
(72) Erfinder: Girnghuber, Claus, 84163 Marklkofen (DE); Herzog, Thomas, 80805 München (DE)
(74) Vertreter: LKGLOBAL Lorenz & Kopf PartG mbB Patentanwälte

(57) **Zusammenfassung**

Die vorliegende Erfindung befasst sich mit Photovoltaik in einer Keramikfassade. Um weitere Möglichkeiten für die Nutzung von Photovoltaik in Fassadenflächen zur Verfügung zu stellen, ist eine Fassadenverkleidung (10) vorgesehen, die wenigstens eine keramische Fassadenplatte (12) und wenigstens eine Befestigungsvorrichtung (14) für wenigstens ein Photovoltaik-Modul (16) aufweist. Das Photovoltaik-Modul ist mit der wenigstens einen Befestigungsvorrichtung an der Fassadenplatte befestigbar. Die wenigstens eine Befestigungsvorrichtung ist ausgebildet, wenigstens einen Teil der Lasten des Photovoltaik-Moduls in die Fassadenplatte einzuleiten und die Fassadenplatte ist ausgebildet, den wenigstens einen Teil der Lasten des Photovoltaik-Moduls in eine Unterkonstruktion einzuleiten.

## Beschreibung

### PRIORITÄT FRÜHER ANMELDUNGEN

Diese Anmeldung beansprucht die Priorität der Deutschen Patentanmeldung Az. 10 2020 101 900.9, eingereicht am 27. Januar 2020, die hiermit in ihrer Gesamtheit durch die Bezugnahme aufgenommen wird. Diese Anmeldung beansprucht außerdem die Priorität der Deutschen Patentanmeldung Az. 10 2020 118 398.4, eingereicht am 13. Juli 2020, die hiermit in ihrer Gesamtheit durch die Bezugnahme aufgenommen wird.

### GEBIET DER ERFINDUNG

Die vorliegende Erfindung befasst sich mit Photovoltaik in einer Keramikfassade, und betrifft insbesondere eine Fassadenverkleidung, ein Fassadensystem, ein mit Photovoltaik-Modulen nachrüstbares Fassadensystem und ein Verfahren zur Befestigung von Photovoltaik-Modulen im Fassadenbereich.

### HINTERGRUND DER ERFINDUNG

Im Zusammenhang mit den Erkenntnissen zum weltweiten Klimawandel stehen energetisch günstige Gebäude im Fokus. Dabei kommt auch den verwendeten Baustoffen eine tragende Rolle zu. Im Bereich von Fassaden kommen zum Beispiel Ziegelfassaden als vorgehängte Fassaden zum Einsatz, insbesondere mit großformatigen Keramikplatten, d.h. Ziegelplatten aus gebranntem Ton, nicht zuletzt aufgrund der günstigen Umweltbilanz bzw. Umweltfreundlichkeit dieses Werkstoffs. Zum Beispiel beschreibt die EP 1681404 A2 Fassadenplatten für vorgehängte hinterlüftete Fassadenkonstruktionen. Im Zusammenhang mit dem steigenden Bedarf an elektrischer Energie gewinnt auch die Energiegewinnung aus Solarenergie (wieder) zunehmend an Bedeutung, beispielsweise auf Dachflächen. Es hat sich aber gezeigt, dass im Verhältnis zum umbauten Raum immer weniger Dachflächen für die Nutzung von Photovoltaik (PV) zur Verfügung stehen. In der Folge werden immer mehr Flächen außerhalb der bebauten Gebiete für die Erzeugung von Strom mittels Photovoltaik herangezogen. Es besteht jedoch ein weiterer Bedarf nach möglichen Flächen zur Erzeugung von elektrischer Energie aus solarer Strahlung.

### ZUSAMMENFASSUNG DER ERFINDUNG

Eine Aufgabe der vorliegenden Erfindung besteht daher darin, weitere Möglichkeiten für die Nutzung von Photovoltaik in Fassadenflächen zur Verfügung zu stellen.

Diese Aufgabe wird durch die Fassadenverkleidung, durch das Fassadensystem, durch das mit Photovoltaik-Modulen nachrüstbare Fassadensystem und durch das Verfahren zur Befestigung von Photovoltaik-Modulen nach einem der unabhängigen Ansprüche erreicht. Beispielhafte Ausführungsformen sind in den Unteransprüchen angegeben.

Gemäß der Erfindung ist eine Fassadenverkleidung vorgesehen, die wenigstens eine keramische Fassadenplatte und wenigstens eine Befestigungsvorrichtung für wenigstens ein Photovoltaik-Modul aufweist. Mit der wenigstens einen Befestigungsvorrichtung kann das Photovoltaik-Modul an der Fassadenplatte befestigt werden. Die wenigstens eine Befestigungsvorrichtung ist ausgebildet, wenigstens einen Teil der Lasten des Photovoltaik-Moduls in die Fassadenplatte einzuleiten. Die Fassadenplatte ist ausgebildet, den wenigstens einen Teil der Lasten des Photovoltaik-Moduls in eine Unterkonstruktion einzuleiten.

Die Keramikplatten werden also für die Halterung der Photovoltaik-Module herangezogen, oder zumindest für ein Abstützen und Ableiten eines Teils der Kräfte der Photovoltaik-Module. Dies erlaubt die Befestigung der Photovoltaik-Module z.B. direkt an den Keramikplatten. Dadurch ergibt sich eine zusätzliche Möglichkeit Photovoltaik in Fassadenflächen nutzen zu können.

Die Befestigung der Photovoltaik-Module direkt an den keramischen Fassadenplatten ermöglicht einen modulare Einsatz von Photovoltaik in Keramikfassaden. Damit lässt sich ein weiteres Feld für die Nutzung von Solarenergie zur Verfügung stellen. Photovoltaik ist eines der Hauptprinzipien für die effiziente Nutzung der Umweltenergie im baulichen Bereich der Gebäudeversorgung mit Strom. Durch die tragende Konstruktion der Ziegelfassaden wird ein großes Spektrum technischer und gestalterischer Varianten bei Materialien und Farben in Kombination mit den Photovoltaik-Flächen verfügbar gemacht.

Die vorliegende Erfindung stellt folglich ein universelles System für die energetische Sanierung und für Neubauten zur Verfügung. Für die Stromerzeugung auf der Gebäudehülle wird ein einheitliches Systems der Gebäudebekleidung vorgeschlagen, das es ermöglicht auf ein und derselben Außenwand Photovoltaik und Ziegelfassade zu kombinieren. Dies ermöglicht es zum Beispiel im städtischen Kontext auf architektonisch ansprechende Weise, nur den besonnten Teil der Fassade, aufgrund der wechselseitigen Verschattung der Gebäude im Winterhalbjahr zumeist die oberen Stockwerke, mit Photovoltaik auszustatten. Die bei der Verwendung großformatiger Tonplatten systemimmanente Technik aus Wärmedämmung Aluminium-Unterkonstruktion und Plattenbehang dient der Photovoltaik als Trägerfläche. Das Fassadensystem eignet sich für nahezu jede Art von geschlossener Außenwandoberfläche und kann neben seinen Wetterschutz - und Wärmedämmfunktionen auch zusätzlich als Gewinnfläche für Umweltenergie eingesetzt werden. Die Photovoltaik-Aktivtechnik wird so Bestandteil eines in sich stimmigen Fassadenbaukastens von Tonziegelfassaden.

Im vorliegenden Zusammenhang bezieht sich der Begriff Gebäudebekleidung vor allem auf den Bereich der Fassade. Statt Gebäudebekleidung kann auch der Begriff Fassadenbekleidung verwendet werden. Gebäudebekleidung kann sich aber auch auf den Bereich der Dächer beziehen. Für Gebäudebekleidung wird auch der Begriff Gebäudeverkleidung verwendet, und für Fassadenbekleidung der Begriff Fassadenverkleidung. Der Begriff Fassadenbekleidung (oder Fassadenverkleidung) bezieht sich insbesondere auf die Verkleidung der Fassadenbereiche, zum Beispiel der geschlossenen Fassadenbereiche.

Die keramische Fassadenplatte kann auch als Fassadenverkleidungsvorrichtung bezeichnet werden. Die Fassadenverkleidung, bzw. die keramische Fassadenplatte ist als bi-funktionale Platte ausgebildet. Zum einen übernimmt sie die Rolle der Verkleidung der äußeren Fassadenschicht, zum anderen übernimmt sie die Rolle der Befestigung des Photovoltaik-Moduls.

Der Begriff "Fassadenplatte" bezieht sich auf einen im wesentlichen flachen Körper, der zur Verkleidung der Fassade ausgebildet ist und eine zumindest selbsttragende Struktur bildet.

Der Begriff "keramische Fassadenplatte" bezieht sich auf ein plattenartiges Bauteil, das einen keramischen Werkstoff aufweist. Vorzugsweise besteht die keramische Fassadenplatte im Wesentlichen, d.h. zu einem großen Teil, z.B. mindestens 50%, z.B. 80% oder 90 % aus dem keramischen Werkstoff, d.h. aus einer keramischen Masse. Unter "keramischer Masse" werden anorganische nichtmetallische Werkstoffe verstanden, wie beispielsweise gebrannter Ton.

Das Bauteil wird auch Bauelement oder Baukomponente genannt, mit Blick auf ein Fassaden- oder Bausystem.

Der Begriff "Photovoltaik-Modul" bezeichnet ein in der Regel flächiges Photovoltaik-Bauteil. Ein Photovoltaik-Modul kann dabei ein oder mehrere Photovoltaik-Elemente, sogenannte Solarzellen (oder Photovoltaik-Zellen) aufweisen. Der Begriff Modul verweist in diesem Zusammenhang auf die Anordnung mehrerer Photovoltaik-Module in der Fassade. Beispielsweise sind in einem Fassadensystem mehrere keramische Fassadenplatten vorgesehen, die jeweils ein oder mehrere Photovoltaik-Module tragen. Die Vielzahl der Photovoltaik-Module ergibt dann eine Fassadenphotovoltaikanlage zur Erzeugung elektrischer Energie.

Der Begriff Photovoltaik bezieht sich auf die Umwandlung von Lichtenergie in elektrische Energie durch Solarzellen. Der Begriff Modul wird hier unabhängig von der elektrischen Schaltung der Solarzellen verwendet.

Die "Lasten" des Photovoltaik-Moduls umfassen beispielsweise die Befestigungslasten, d.h. das Eigengewicht des Photovoltaik-Moduls und die aus Windbeaufschlagung des Photovoltaik-Moduls resultierenden Lasten (Winddruck und Windsog).

Der Begriff "Fassade" bezieht sich insbesondere auf die seitlichen Teile der Hülle eines Gebäudes. Die Fassade bezieht sich also auf die Außenseiten der Wandflächen des Gebäudes. Zusammen mit dem Dach, d.h. der Dachfläche, und den äußeren Begrenzungsflächen im Erdreich bildet die Fassade die Gebäudehülle. Der Begriff Fassade bezieht sich folglich auf die seitlichen Teile der Gebäudehülle, insbesondere der im wesentlichen vertikalen Außenwandflächen.

Der Begriff "Fassadenkonstruktion" bezieht sich allgemein auf den konstruktiven Wandaufbau mit den verschiedenen Schichten.

Der Begriff "Unterkonstruktion" der Fassade bezieht sich allgemein auf den nicht sichtbaren Teil der Konstruktion, der zur Befestigung der eigentlichen Bauteile der Fassade vorgesehen ist, bzw. notwendig ist, und in der Regel (bezogen auf die Ansicht von außen) unter der Fassadenverkleidung angeordnet ist. Die Unterkonstruktion kann aber auch sichtbar angeordnet sein, und sich auch auf der äußeren Seite der Fassadenverkleidungselemente befinden. Die Unterkonstruktion weist beispielsweise horizontale oder vertikale Tragprofile auf, an denen Halter zur Aufnahme der Fassadenverkleidung befestigt sind. Die Tragprofile wiederum sind dann an tragenden Strukturen des Gebäudes befestigt, zum Beispiel an (vertikalen) Pfosten oder (horizontalen) Riegeln einer Fassade oder Geschossdecken. Die Unterkonstruktion umfasst insbesondere Last abtragende Elemente und Halterungen bzw. Befestigungen für Fassadenverkleidungselemente. Die Unterkonstruktion kann auch als Fassadenunterkonstruktion bezeichnet werden.

Der Begriff "vorgehängt" bezieht sich darauf, dass die Fassadenplatten eine äußere Ebene der Fassade bilden, die einer weiteren Wandebene auf der Außenseite mit Abstand vorgelagert angeordnet ist. Die äußere Ebene der Fassadenplatten ist dabei an die dahinterliegende weitere Wandebene konstruktiv angebunden. In der Regel erfolgt eine Befestigung der äußeren Ebene an der Tragstruktur des Gebäudes. Oftmals erfolgt diese hängend bzw. stehend zwischen den Geschossdecken. Die vorgehängte Fassade ist dann Teil einer Vorhangfassade. Der Abstand der vorgehängten Fassade ist zum Beispiel vorgesehen, um eine Hinterlüftung der äußeren Ebene der Fassadenplatten zur Verfügung zu stellen. Die äußere Ebene der Fassadenplatten übernimmt innerhalb des Fassadenaufbaus zum Beispiel die Funktion, Niederschlag, insbesondere Schlagregen, abzuhalten. Je nach Ausbildung der Flächen und Fugen wird auch zumindest ein Teil der Windlast abgefangen. Zusätzlich sind die Fassadenplatten auch der Sonneneinstrahlung ausgesetzt. Der erwähnte weitere Wandaufbau übernimmt zum Beispiel die Funktion der thermischen und akustischen Dämmung. Der weitere Wandaufbau kann auch die Winddichtigkeit der Fassade gewährleisten. Im Gegensatz zu einer beispielsweise gemauerten tragenden Wand wird eine vorgehängte Fassade in der Regel nicht zur Ableitung der statischen Kräfte des Gebäudes herangezogen, sondern nur zur Ableitung der aus der Fassade selbst herrührenden Kräfte.

Der Begriff "hinterlüftet" bezieht sich auf den zwischen den Fassadenplatten und dem dahinterliegenden weiteren Wandaufbau ausgebildeten freien Abstand, in dem zumindest eine gewisse Luftströmung vorgesehen ist, um gegebenenfalls in diesen Bereich eingedrungene Feuchtigkeit durch den Luftstrom wieder nach außen abzuführen.

Gemäß eine Option besteht die Fassadenplatte aus einem Ziegelwerkstoff. In einer Option ist die Fassadenplatte stranggepresst. In einer weiteren Option ist die Fassadenplatte als großformatige Ziegelplatte ausgebildet.

Gemäß einem Beispiel weist die Befestigungsvorrichtung eine Halterung auf, die an einem Rand der Fassadenplatte befestigt werden kann.

Als Option ist vorgesehen, dass die Befestigungsvorrichtung eine obere Randhalterung aufweist, die in montiertem Zustand der Fassadenplatten am oberen Rand der Fassadenplatten aufliegend befestigbar ist.

In einem Beispiel weist die Halterung eine obere Haltelasche auf, die auf dem oberen Rand der Fassadenplatten aufliegt und die wenigstens einen Vorsprung aufweist, um in Vertiefungen im stirnseitigen Rand der Fassadenplatten einzugreifen.

In einem Beispiel weist die Befestigungsvorrichtung eine untere Randhalterung auf, die in montiertem Zustand der Fassadenplatten am unteren Rand der Fassadenplatten eingreifend befestigbar ist.

In einem Beispiel sind die keramischen Platten im montierten Zustand hochkant angeordnet.

Gemäß einem Beispiel kann die Halterung an einem Stoßbereich von zwei benachbarten Fassadenplatten mit einer Lasche in eine untere Aufnahme einer oberen Fassadenplatte oder in eine Aufnahme einer Fassadenhalterung im Stoßbereich von unten eingeschoben werden. Die Lasche kann sich an dem oberen Rand der unteren Fassadenplatte abstützen, um so das Photovoltaik-Modul zu halten. Die Lasche kann sich zusätzlich an einer vorderen Seitenwand der Aufnahme und an dem oberen Rand der unteren Fassadenplatte abstützen, um so das Photovoltaik-Modul zu halten.

Die Halterung ragt aus dem Stoßbereich nach außen heraus, um dort die Photovoltaik-Module zu befestigen.

In einem Beispiel ist eine Fassadenhalterung für die Keramikplatten vorgesehen, die eine nach unten weisende Nut aufweist, in welche die Lasche einsteckbar ist.

Gemäß einem Beispiel ist zwischen zwei benachbarten Fassadenplatten eine Fuge ausgebildet und die Halterung kann in einer um ca. 90° um eine senkrecht zur Platte verlaufende Achse verdrehten Einführposition in die Fuge eingesetzt werden und durch eine gegenläufige Rotation um ca. 90° in eine Halteposition bewegt werden, in der die Halterung gehalten ist.

Gemäß einem Beispiel weist die Fassadenplatte an der Außenseite Profilierungen auf, die als Hervorhebungen ausgebildet sind, an denen Photovoltaik-Module abgestützt werden können.

Als Option ist vorgesehen, dass die Profilierungen als lineare Vorsprünge ausgebildet sind. Als weitere Option ist vorgesehen, dass die linearen Vorsprünge seitlich abstehende Bereiche aufweisen, die, bezogen auf eine Senkrechte zur Erstreckung der Fassadenplatte, eine Hinterschneidung zum Hintergreifen mit der wenigstens einen Befestigungsvorrichtung bilden. Als noch weitere Option ist vorgesehen, dass die linearen Vorsprünge in montiertem Zustand der Fassadenplatten in vertikaler Richtung verlaufen.

In einem anderen Beispiel verlaufen die linearen Vorsprünge in montiertem Zustand der Fassadenplatten in horizontaler Richtung.

In einem Beispiel hat die Befestigungsvorrichtung ein klammerartiges Fußteil, das die seitlich abstehenden Bereiche auf zwei Seiten der linearen Vorsprünge umgreift. Eine Halterung für das Photovoltaik-Modul ist an dem klammerartigen Fußteil befestigt.

Gemäß einem Beispiel weist die Fassadenplatte Ausnehmungen für das Zusammenwirken mit der wenigstens einen Befestigungsvorrichtung auf. In einer Option sind die Ausnehmungen als linear ausgebildete Vertiefungen auf der Außenseite der Fassadenplatte vorgesehen. Die Ausnehmungen können beispielsweise zur Aufnahme von Halterungen für die Befestigung des wenigstens einen Photovoltaik-Moduls ausgebildet sein. Alternativ oder ergänzend können die Ausnehmungen beispielsweise zum Eingriff von Halterungen für die Befestigung des wenigstens einen Photovoltaik-Moduls ausgebildet sein.

Gemäß einer Option weisen die Ausnehmungen Bereiche auf, die, bezogen auf eine Senkrechte zur Erstreckung der Fassadenplatte, eine Hinterschneidung zum Hintergreifen der wenigstens eine Befestigungsvorrichtung bilden.

Als weitere Option ist vorgesehen, dass die Ausnehmungen als lineare Ausnehmungen ausgebildet sind, die in montiertem Zustand der Fassadenplatten vertikal verlaufen.

In einem anderen Beispiel verlaufen die Ausnehmungen in montiertem Zustand der Fassadenplatten in horizontaler Richtung.

Gemäß einer zusätzlichen oder alternativen Option weist die Fassadenplatte Aufdickungen auf und die Ausnehmungen sind in den Aufdickungen vorgesehen.

Als weitere Option ist vorgesehen, dass die Aufdickungen als linear verlaufende Vorsprünge ausgebildet sind und die Ausnehmungen in den Vorsprüngen angeordnet sind.

Gemäß einem Beispiel weist die Fassadenplatte eine vordere und eine hintere Plattenschale auf, die durch Stege miteinander verbunden sind. Längslöcher sind vorgesehen, die parallel zu den Stegen zwischen den Stegen angeordnet sind. Die Halterungen greifen in wenigstens eines der Längslöcher ein.

Dies ermöglicht die Befestigung der Photovoltaik-Module weitestgehend auf Grundlage der Regelprofile von z.B. bestehenden großformatigen Platten.

Gemäß einem Beispiel weist die Fassadenplatte einen zentralen Bereich auf, der in einer Option von den Ausnehmungen begrenzt wird. Die Fassadenplatte weist einen Randbereich auf, der den zentralen Bereich wenigstens teilweise umgibt. Der Randbereich kann wenigstens teilweise abgetrennt werden, so dass die Fassadenplatte an verschiedene Maße angepasst werden kann. Als Option ist vorgesehen, dass der zentrale Bereich auf Modulmaße der Photovoltaik-Module abgestimmt ist.

In einem Beispiel ist wenigstens ein Photovoltaik-Modul vorgesehen, das mit der wenigstens einen Befestigungsvorrichtung an der Fassadenplatte befestigt ist. Als Option ist vorgesehen, dass das wenigstens ein Photovoltaik-Modul an der Fassadenplatte hinterlüftet oder anliegend gehalten ist.

Gemäß einem Beispiel können an der Fassadenplatte mehrere Photovoltaik-Module nebeneinander mit Zwischenabstand zueinander und mit Halteabstand zu der Fassadenplatte befestigt werden. Die Fassadenplatte weist eine helle Oberfläche auf. Die Photovoltaik-Module weisen eine zweiseitig aktive Wirkschicht zur Stromerzeugung auf, so dass die in den Zwischenabstand eindringende solare Strahlung von der hellen Oberfläche an die Rückseite der Photovoltaik-Module reflektiert werden kann und mit den Photovoltaik-Modulen beidseitig Strom erzeugt werden kann.

In einer Variante weist die wenigstens eine keramische Fassadenplatte eine äußere Abmessungen auf, die mit Abmessungen von Fassadenplatten der bereits bekannten vorgehängten Ziegelfassadensystemen übereinstimmt. Beispielsweise ist eine Kompatibilität mit den Fassadensystemen der Firma Moeding vorgesehen.

In einer weiteren Variante ist für die wenigstens eine keramische Fassadenplatte eine Fassadenhalterung zur Montage an einer Unterkonstruktion vorgesehen. Die Fassadenhalterung stimmt mit Fassadenhalterungen der bereits bekannten vorgehängten Ziegelfassadensystemen überein bzw. ist mit diesen zumindest kompatibel.

Dies ermöglicht zum einen den Rückgriff auf bereits vielfach erprobte und ausgereifte Konstruktionen. Zum anderen wird dadurch auch eine Kombinierbarkeit zur Verfügung gestellt. Ein weiterer wichtiger Aspekt ist die Möglichkeit des nachträglichen Umrüstens. Bereits vorhandene Fassaden können zum Beispiel im Rahmen eines Retrofittings zu einer zumindest in Teilbereichen aktiven Photovoltaik-Fassade um- bzw. aufgerüstet werden.

In einem Beispiel ist ein Fassadensystem vorgesehen, das eine vorgehängte Fassadenkonstruktion mit einer Unterkonstruktion zur Befestigung an einer tragenden Struktur eines Gebäudes und eine Verkleidung aufweist, die an der Unterkonstruktion befestigt werden kann. Wenigstens ein Teil der Verkleidung ist als Fassadenverkleidung nach einem der vorhergehenden Beispiele ausgebildet.

Gemäß der Erfindung ist auch ein Fassadenhalteprofil zur Befestigung von Photovoltaik-Modulen in einem Fassadensystem mit keramischen Fassadenplatten vorgesehen. Das Fassadenhalteprofil weist einen ersten Haltebereich auf, der mit einer Aufnahme für Randbereiche von Photovoltaik-Modulen ausgebildet ist. Das Fassadenhalteprofil weist auch einen zweiten Haltebereich, der dem ersten Haltebereich gegenüber angeordnet ist und der mit einem Vorsprung zum Eingreifen in eine Unterkonstruktion zur Befestigung von keramischen Fassadenplatte ausgebildet ist.

Das Fassadenhalteprofil kann auch als Befestigungsprofil bezeichnet werden. Das Fassadenhalteprofil ist beispielsweise mit der Aufnahme auf Standardplattendicken von Photovoltaik-Modulen abgestimmt, und kann so auf die Ränder von Photovoltaik-Modulen aufgesteckt werden. Das Fassadenhalteprofil kann auch als Aufsteckprofil oder Aufsteckelement bezeichnet werden.

Das Fassadenhalteprofil kann auch als Ansteckteil oder Adapterteil bezeichnet werden. Die Adapter können vertikal oder horizontal an den Photovoltaik-Modulen angebracht sein und sich über jeweils eine ganze Kante oder nur ein Stück einer Kante erstrecken.

Das Fassadenhalteprofil kann punktweise an den Rändern der Photovoltaik-Module vorgesehen sein. Das Fassadenhalteprofil kann als Halteprofil entlang eines Teils der Rändern der Photovoltaik-Module vorgesehen sein, beispielsweise über die gesamten Seitenlängen.

Gemäß einer Option weist der zweite Haltebereich in einer ersten Option einen hinteren Kopffalz zur Ausbildung eines oberen Fassadenhalteprofils auf. In einer zweiten Option weist der zweite Haltebereich einen vorderen Fußfalz und einen hinteren Fußfalz zur Ausbildung eines unteren Fassadenhalteprofils auf, wobei der hintere Fußfalz kleiner als der vordere Fußfalz ausgebildet ist und von dem vorderen Fußfalz durch eine Nut getrennt ist.

Gemäß der Erfindung ist auch eine Fassadenverkleidung vorgesehen, die wenigstens eine keramische Fassadenplatte und wenigstens eine Befestigungsvorrichtung für wenigstens ein Photovoltaik-Modul aufweist. Mit der wenigstens einen Befestigungsvorrichtung kann das Photovoltaik-Modul befestigt werden. Die wenigstens eine Befestigungsvorrichtung weist ein Fassadenhalteprofil nach einem der vorhergehenden Beispiele und Optionen auf und das wenigstens eine Photovoltaik-Modul ist mit dem Fassadenhalteprofil gehalten.

Gemäß der Erfindung ist auch ein Fassadensystem vorgesehen, das eine vorgehängte Fassadenkonstruktion mit einer Unterkonstruktion zur Befestigung an einer tragenden Struktur eines Gebäudes und eine Verkleidung aufweist, die an der Unterkonstruktion befestigt werden kann. Die Verkleidung weist keramische Fassadenplatten auf, die an der Unterkonstruktion befestigt werden können. Die Verkleidung weist auch Photovoltaik-Module auf, die über die Unterkonstruktion an der tragenden Struktur befestigt werden können.

Als Option ist vorgesehen, dass wenigstens ein Teil der Verkleidung als Fassadenverkleidung nach einem der vorhergehenden Beispiele und Optionen ausgebildet ist, z.B. nach einem der Beispiele, bei denen die Befestigungsvorrichtung einen Teil der Lasten des Photovoltaik-Moduls in die Fassadenplatte einleitet oder nach einem der Beispiele mit dem Fassadenhalteprofil.

Die vorgehängte Fassadenkonstruktion weist beispielsweise Platten, Tragprofile und Plattenhalter auf. Die vorgehängte Fassadenkonstruktion bildet mit den an den keramischen Fassadenplatten befestigten Photovoltaik-Modulen eine energetisch aktive Tonziegelfassade, bzw. bildet einen photovoltaik-aktiven Fassadenbaukasten, der auch als photovoltaik-aktives Fassadensystem bezeichnet werden kann. Das Fassadensystem kann sowohl großformatige Ziegelplatten in Querformat als auch in Hochformat aufweisen.

Beispielsweise kommen horizontale oder vertikale Tragprofile für die Ziegelplatten zum Einsatz. Zum Beispiel werden zunächst alle Tragprofile montiert, woraufhin die Plattenhalter in diese eingeklipst beziehungsweise an diesen angenietet werden, so dass die keramischen Fassadenplattenbefestigt werden können, um an diesen die Photovoltaik-Module anzubringen.

Gemäß einem Beispiel ist wenigstens ein Teil der Photovoltaik-Module als Photovoltaik-Platten ausgebildet, die direkt an der Unterkonstruktion befestigt werden können.

In einer Option ist vorgesehen, dass die Photovoltaik-Platten und die keramischen Fassadenplatten an der gleichen Unterkonstruktion befestigt werden können, so dass eine einheitliche Unterkonstruktion verwendbar ist, unabhängig ob Photovoltaik-Platten oder keramische Fassadenplatten montiert werden.

In einer anderen Option ist zusätzlich oder alternativ vorgesehen, dass die Photovoltaik-Platten und die keramischen Fassadenplatten mit den gleichen Befestigungsmitteln und Haltern an der Unterkonstruktion befestigt werden können.

In einer weiteren Option ist zusätzlich oder alternativ vorgesehen, dass die Photovoltaik-Platten und die keramischen Fassadenplatten austauschbar an der Unterkonstruktion gehalten sind.

In einem Beispiel sind erste Bereiche und zweite Bereiche vorgesehen. Die ersten Bereiche sind flächige Fassadenfelder. Die zweiten Bereiche weisen Fassadensonderfelder auf mit wenigstens einem Element aus der Gruppe von horizontale Fassadenkante, vertikale Fassadenkante, vorspringende Fassadenecke, zurückspringende Fassadenecke, seitlicher Fassadenanschluss, unterer Fassadenanschluss, oberer Fassadenanschluss, seitlicher Fassadenrand, unterer Fassadenrand und oberer Fassadenrand. In wenigstens einem Teil der ersten Bereiche sind die Photovoltaik-Module vorgesehen. In den zweiten Bereichen sind wenigstens teilweise keramische Fassadenelemente vorgesehen. Die keramischen Fassadenelemente umfassen beispielsweise keramische Fassadenplatten.

Die flächigen Fassadenfelder können auch als Standardfelder oder Standardmodulfelder bezeichnet werden. Die Fassadensonderfelder können auch als Anschlussfelder, Anschlussmodule oder Anpassungsfelder bezeichnet werden.

In einem Beispiel können in wenigstens einem Teil der ersten Bereiche die Photovoltaik-Module befestigt werden.

In einem Beispiel sind die Photovoltaik-Module in wenigstens einem Teil der ersten Bereiche vorgesehen.

Gemäß der Erfindung ist auch ein mit Photovoltaik-Modulen nachrüstbares Fassadensystem vorgesehen. Das nachrüstbare Fassadensystem weist eine vorgehängte Fassadenkonstruktion mit einer Unterkonstruktion zur Befestigung an einer tragenden Struktur eines Gebäudes und einer Verkleidung auf, die an der Unterkonstruktion befestigbar ist. Die Verkleidung weist keramische Fassadenplatten auf, die an der Unterkonstruktion befestigbar sind. Eine Befestigungsanordnung ist vorgesehen, mit der Photovoltaik-Module in montiertem Zustand des Fassadensystems nachträglich befestigt werden können.

Die Nachrüstbarkeit bietet z.B. den Vorteil, dass ein Gebäude zu einem späteren Zeitpunkt durch Photovoltaik aufgewertet werden kann, ohne dass die Fassade komplett ausgetauscht werden muss.

Gemäß einem Beispiel des nachrüstbaren Fassadensystems weist die Befestigungsanordnung zweiteilige Befestigungen auf. Ein erster Befestigungsteil wird bei der Montage des Fassadensystems montiert; ein zweiter Befestigungsteil kann nachträglich an dem ersten Befestigungsteil befestigt werden, um ein Photovoltaik-Modul zu befestigen. Das erste Befestigungsteil ist als eine bi-funktionale Halterung der keramischen Fassadenplatten ausgebildet. Ein erster Haltebereich ist zur Befestigung an der Unterkonstruktion vorgesehen, ein zweiter Haltebereich ist zum Halten der keramischen Fassadenplatten ausgebildet und ein dritter Haltebereich dient der Befestigung der Photovoltaik-Module. Das zweite Befestigungsteil ist mit dem dritten Bereich verbindbar und ist als Halterung für Photovoltaik-Module ausgebildet.

In einer ersten Variante ist der dritte Haltebereich als ein Haltevorsprung ausgebildet, der in einem Fugenbereich zwischen zwei angrenzenden keramischen Fassadenplatten angeordnet werden kann und einen Kopplungsbereich für eine Verbindung mit dem zweiten Befestigungsteil aufweist. Das zweite Befestigungsteil kann mit dem Kopplungsbereich verbunden werden.

Alternativ oder ergänzend ist in einer zweiten Variante der dritte Haltebereich als eine Profilierung ausgebildet, in der das zweite Befestigungsteil eingehängt werden kann.

In einem Beispiel ist der Haltevorsprung derart ausgebildet, dass er sich auf einer eingesetzten keramischen Fassadenplatte abstützt und so ein Teil der Lasten der Photovoltaik-Module über die keramische Fassadenplatte in die Unterkonstruktion eingeleitet wird. Ein anderer Teil der Lasten wird über die Halterung in die Unterkonstruktion eingeleitet.

Dadurch wird ein Fassadensystem zur Verfügung gestellt, bei dem aufgrund der in die Profilschienen einsetzbaren Halter ein Nachrüsten mit Photovoltaik-Modulen möglich ist. Die Halter bilden eine nachrüstbare Halterung.

Die nachrüstbare Fassade ermöglicht insbesondere das Anbringen der Photovoltaik-Module in einer weiteren Ebene vor den keramischen Fassadenplatten, zum Beispiel mit einem Abstand, d.h. Luftzwischenraum, zu den keramischen Fassadenplatten.

Der Luftzwischenraum bietet zum einen die Möglichkeit der Hinterlüftung und damit Kühlung der Photovoltaik-Module, was sich positiv auf die Effizient auswirkt, und zum anderen auch die Möglichkeit, bei schräg (seitlich oder von oben) einfallendem Licht, d.h. Sonnenstrahlen, über Reflektion an den keramischen Fassadenplatten auch die Rückseite der Photovoltaik-Module mit solarer Strahlung zu beaufschlagen. Über Photovoltaikelemente auf der Rückseite der Photovoltaik-Module lassen sich so zusätzliche Flächen zur Energiegewinnung zur Verfügung stellen.

Beispielsweise eignet sich auch die oben beschriebene Halterung, die in einer um ca. 90° um eine senkrecht zur Platte verlaufende Achse verdrehten Einführposition in die Fuge einsetzbar ist, und durch eine gegenläufige Rotation um ca. 90° in eine Halteposition bewegbar ist, in der die Halterung befestigt ist, zum Nachrüsten einer Fassade mit Photovoltaik-Modulen.

Das zweite Befestigungsteil ragt dabei aus dem Fugenbereich nach außen heraus.

In einem Beispiel ist vorgesehen, dass der dritte Haltebereich innerhalb des Fugenbereichs vorgesehen ist. Der Kopplungsbereich kann dabei zur Vorderseite der keramischen Fassadenplatten versetzt angeordnet sein, d.h. nicht bündig. In einer anderen Variante ist der Kopplungsbereich bündig ausgebildet.

In einem Beispiel weist der Kopplungsbereich ein Gewinde auf zum Anschrauben des zweiten Befestigungsteils. Zum Beispiel ist das Gewinde ein Innengewinde und der zweite Befestigungsteil ist in das Innengewinde einschraubbar. In einem anderen Beispiel ist das Gewinde ein Außengewinde und der zweite Befestigungsteil ist auf das Außengewinde aufschraubbar.

Das Vorsehen eines Gewindes erlaubt die spätere Montage des zweiten Befestigungsteils. Das hat den Vorteil, dass der erste Befestigungsteils so ausgestaltet werden kann, dass er optisch nicht oder nur sehr dezent in Erscheinung tritt. Erst wenn tatsächlich Photovoltaik-Module zum Einsatz kommen, wird die Befestigungsvorrichtung, d.h. die Befestigungsanordnung vervollständigt. Anstelle eines Gewindes könne auch andere Befestigungen vorgesehen sein, zum Beispiel in der Art eines Bajonett-Verschlusses.

In einem anderen Beispiel ist der Kopplungsbereich eine Befestigungshülse, die an einem Flansch des zweiter Haltebereichs anschraubbar ist. Der zweite Befestigungsteil ist in die Befestigungshülse einschraubbar.

In montiertem Zustand ist der Kopplungsbereich in einem Beispiel in der Fuge angeordnet. Der Kopplungsbereich ist vorgesehen, um nachträglich Photovoltaik-Module montieren zu können, bevorzugt ohne die keramischen Fassadenplatten demontieren zu müssen. Die Halter können bei Bedarf einfach angeschraubt werden.

Die Anordnung des Kopplungsbereichs in der Fuge ermöglicht, dass der Kopplungsbereich von außen zugänglich ist, so dass eine Befestigung der Photovoltaik-Module zur Verfügung gestellt ist, die von außen erreichbar ist. Dadurch lassen sich Photovoltaik-Module nach Montage der keramischen Fassadenplatten befestigen, zum Beispiel auch nachträglich. Die Photovoltaik-Module lassen sich dadurch auch nachträglich leichter abnehmen und wieder einbauen, zum Beispiel für Reparatur- oder Wartungszwecke. Das bedeutet weitere ökonomische Vorteile für den Betrieb der Photovoltaik-Fassade.

Die Profilierung ist beispielsweise an der Halterung der keramischen Platten ausgebildet und die Halterung für die Photovoltaik-Module kann in die Halterung der keramischen Platten eingehängt werden.

In einer Option des Fassadensystems, und insbesondere des nachrüstbaren Fassadensystems, ist wenigstens ein Teil der keramischen Fassadenplatten durch Photovoltaik-Module austauschbar.

Dadurch wird ein Fassadensystem zur Verfügung gestellt, bei dem aufgrund der nachrüstbaren Photovoltaik-Module im Austausch mit den Ziegelplatten ein Nachrüsten der Fassade mit Photovoltaik-Modulen möglich ist.

In einem Beispiel ist ein Fassadensystem vorgesehen, das eine vorgehängte Fassadenkonstruktion mit einer Unterkonstruktion zur Befestigung an einer tragenden Struktur eines Gebäudes und einer (Fassaden-) Verkleidung aufweist, die an der Unterkonstruktion befestigt werden kann. Die (Fassaden-) Verkleidung weist keramische Fassadenplatten und Photovoltaik-Module auf, die über die gleiche Unterkonstruktion an der tragenden Struktur befestigt werden können.

Gemäß der Erfindung ist auch ein Fassadensystem vorgesehen, das eine vorgehängte Fassadenkonstruktion mit einer Unterkonstruktion zur Befestigung an einer tragenden Struktur eines Gebäudes und einer Verkleidung aufweist, die an der Unterkonstruktion befestigt werden kann. Die Verkleidung weist keramische Fassadenplatten und Photovoltaik-Module auf, die an der Unterkonstruktion befestigt werden können. Die Unterkonstruktion weist Halterungen auf und die keramischen Fassadenplatten und die Photovoltaik-Module sind über die gleichen Halterungen gehalten.

In einem Beispiel weist die Unterkonstruktion eine lastabtragende Struktur auf, die an der tragenden Struktur befestigbar ist. Die Unterkonstruktion weist außerdem die Halterungen auf, die an der lastabtragenden Struktur befestigt sind und mit denen die keramischen Fassadenplatten und die Photovoltaik-Module an der lastabtragenden Struktur befestigt sind.

Gemäß einer Option ist wenigstens ein Teil der Photovoltaik-Module mit einem Fassadenhalteprofil nach einem der oben genannten Beispiele und Optionen an der Unterkonstruktion gehalten.

Damit wird eine Verwendung von keramischen Fassadenplatten und von Photovoltaik-Modulen in einem Fassadensystem zur Verfügung gestellt, das mit der gleichen Unterkonstruktion auskommt.

Beispielsweise können die Photovoltaik-Module mit Halteprofilen als Ansteckteile oder Adapterteile ausgestattet sein, um die Photovoltaik-Module in die Unterkonstruktion zu integrieren.

Gemäß der Erfindung ist auch ein Verfahren zur Befestigung von Photovoltaik-Modulen im Fassadenbereich vorgesehen. Das Verfahren weist die folgenden Schritte auf:
- Vorsehen wenigstens einer keramischen Fassadenplatte;
- Befestigen der wenigstens einen keramischen Fassadenplatte an einer Unterkonstruktion, die an einer tragenden Struktur eines Gebäudes befestigt ist;
- Vorsehen wenigstens eines Photovoltaik-Moduls; und
- Befestigen des wenigstens einen Photovoltaik-Moduls an der tragenden Struktur über die Unterkonstruktion.

In einer ersten Option ist vorgesehen, dass das Photovoltaik-Modul mit wenigstens einer Befestigungsvorrichtung an der Fassadenplatte befestigt wird, dass die wenigstens eine Befestigungsvorrichtung wenigstens einen Teil der Lasten des Photovoltaik-Moduls in die Fassadenplatte einleitet und dass die Fassadenplatte den wenigstens einen Teil der Lasten des Photovoltaik-Moduls in die Unterkonstruktion einleitet.

In einer zweiten Option ist alternativ oder ergänzend vorgesehen, dass Randbereiche der Photovoltaik-Module mit einem Fassadenhalteprofil gehalten werden, das einen ersten Haltebereich, der mit einer Aufnahme für die Photovoltaik-Module ausgebildet ist, und einen zweiten Haltebereich aufweist, der dem ersten Haltebereich gegenüber angeordnet ist und der mit einem Vorsprung in die Unterkonstruktion zur Befestigung der keramischen Fassadenplatte eingreift.

In einer dritten Option ist alternativ oder ergänzend vorgesehen, dass das Befestigen des wenigstens einen Photovoltaik-Moduls nachträglich in montiertem Zustand des Fassadensystems erfolgt.

In einer vierten Option ist alternativ oder ergänzend vorgesehen, dass die keramischen Fassadenplatten und die Photovoltaik-Module über die gleichen Halterungen gehalten werden.

Als Option ist vorgesehen, dass das Photovoltaik-Modul mit wenigstens einer Befestigungsvorrichtung an der Fassadenplatte befestigt wird. Die wenigstens eine Befestigungsvorrichtung leitet wenigstens einen Teil der Lasten des Photovoltaik-Moduls in die Fassadenplatte ein und die Fassadenplatte leitet den wenigstens einen Teil der Lasten des Photovoltaik-Moduls in die Unterkonstruktion ein.

Die Befestigung der Photovoltaik-Module direkt an den keramischen Fassadenplatten stellt eine erweiterte Integration der Photovoltaik-Elemente in Teile der Gebäudehülle zur Verfügung. Die Gewinnung von Strom aus Licht lässt sich somit verbessert mit architektonischer Gestaltung kombinieren. Die Befestigung der Photovoltaik-Module direkt an den keramischen Fassadenplatten löst auch die konstruktiv anspruchsvollen Aspekte der Durchdringung von wasserführenden Schichten, die zum Beispiel bei Dächern problematisch sein kann.

Mit der Befestigung an den Ziegelplatten und der zumindest teilweisen Lastabtragung über diese wird der Bedarf für zusätzliche aufwendige und komplizierte Metallprofile reduziert.

Statt einer möglichst großflächigen Trennung der beiden Bereiche in einerseits Photovoltaikflächen und andererseits z.B. vorgehängte Ziegelfassaden bei der Anwendung von Photovoltaik in Verbindung mit vorgehängten, hinterlüfteten, wärmegedämmten Fassadensystemen, sieht die vorliegende Erfindung ein umgekehrtes Prinzip vor. Die Integration in eine Ziegelfassade stellt ein universell einsetzbares System zur Verfügung mit gelösten Anschlusspunkten: Die Integration der Photovoltaik-Module erfolgt in vorhandene großformatige Fassadenflächen. Durch die Integration in die Ziegelfassade sind die kritischen Fugenbereiche (vertikal und horizontal) der Photovoltaik-Fassade sozusagen externalisiert.

Durch die Möglichkeit, Flächen in großformatigen keramischen Elementen für die Stromgewinnung zu benutzen, lässt sich der tatsächliche Anteil der Flächen, der zur Nutzung für die Stromgewinnung benutzt wird, effizient nutzen. Die großformatige Ausbildung von Photovoltaik-Modulen minimiert außerdem die notwendigen Verbindungen der Module untereinander, so dass Aufwand und Schadensanfälligkeit reduziert sind.

Die vorgehängte, hinterlüftete und wärmegedämmte Ziegelfassade ist ein ideales Konstruktionsprinzip für Außenwände. Beispielsweise ist ein Fassadensystem vorgesehen, bei dem bauphysikalisch-technische Funktionen getrennt werden und den verschiedenen Schichten der Wandkonstruktion zugeordnet sind. Vorgehängte hinterlüftete Fassaden erzielen darüber hinaus deutlich geringere Wärmeverluste im Winter und zuverlässigen Wärmeschutz im Sommer. Zudem haben sie einen positiven Einfluss auf die schalldämmende Wirkung der Außenwand. Darüber hinaus lassen sich durch das System brandschutztechnische Anforderungen baurechtskonform erfüllen.

Ziegelmaterial hat eine unbegrenzte Lebensdauer, es widersteht sämtlichen Umwelteinflüssen und bedarf keinerlei Wartung. Der gebrannte Ziegel ist farbecht, UVbeständig und bleicht nicht aus. Die große Bandbreite an Farben, Formaten, Oberflächen und Formen der Ziegelplatten in Kombination mit der Flexibilität bei der Unterkonstruktion lassen große Freiheit in der Gestaltung und Ausarbeitung der Fassade.

Die Integration von Photovoltaik-Modulen kann im urbanen Raum in gemäßigten Breitengraden beispielsweise in den obersten Geschossen erfolgen mit Blick auf den erheblich flacheren solaren Einfallswinkels im Winterhalbjahr.

Die Integration von Photovoltaik-Modulen in Ziegelfassaden bietet zudem die Möglichkeit, Photovoltaik in Fassadenflächen unterzubringen, in denen weitere nutzungsbedingte Merkmale vorgesehen sind wie zum Beispiel Fenster, Türen, Balkone, Tore, Einfahrten usw. - jeweils in unterschiedlicher Proportion, Dimension und Lage innerhalb der Flächen der Fassaden in den unteren Geschossen. Die vorhandenen Anpassungsmöglichkeiten und Anschlusslösungen der Ziegelfassade ergeben ein adaptives System insbesondere für orthogonale Fassadensysteme.

Die Integration von Photovoltaik-Modulen in Ziegelfassaden bietet insbesondere im urbanen Raum die Möglichkeit Solarenergie zu nutzen und zum Beispiel zur Verbesserung des Wärmeschutzes, insbesondere auch des sommerlichen Wärmeschutzes, begrünte Dächer vorzusehen, was auch für das Stadtklima eine Verbesserungsmaßnahme darstellt. Die Nutzung von Photovoltaik-Modulen in Ziegelfassaden bietet somit ein erweitertes Einsatzfeld von Photovoltaiknutzung.

Das Befestigen der Photovoltaik-Module an den keramischen Fassadenplatten führt zu Photovoltaik in der Keramikfassade, bzw. zu einer Keramikfassade mit Photovoltaik. Die Keramikplatten mit den Photovoltaik-Modulen bilden bi-funktionale Platten, die auch als Hybrid-Platten bezeichnet werden können.

Als Option ist vorgesehen, dass wenigstens ein Teil der Photovoltaik-Module als Photovoltaik-Platten ausgebildet ist und die Photovoltaik-Platten direkt an der Unterkonstruktion befestigt werden.

In einer Option ist vorgesehen, dass die Photovoltaik-Platten und die keramischen Fassadenplatten an der gleichen Unterkonstruktion befestigt werden.

In einer weiteren Option ist vorgesehen, dass die Photovoltaik-Platten und die keramischen Fassadenplatten mit den gleichen Befestigungsmitteln und Haltern an der Unterkonstruktion befestigt werden.

In einem Beispiel ist ein Verfahren zur Befestigung von Photovoltaik-Modulen im Fassadenbereich vorgesehen. Das Verfahren weist die folgenden Schritte auf: Vorsehen wenigstens einer keramischen Fassadenplatte; Befestigen der wenigstens einen keramischen Fassadenplatte an einer Unterkonstruktion, die an einer tragenden Struktur eines Gebäudes befestigt ist; Vorsehen wenigstens eines Photovoltaik-Moduls; und Befestigen des wenigstens einen Photovoltaik-Moduls mit wenigstens einer Befestigungsvorrichtung an der Fassadenplatte und damit über die Unterkonstruktion an der tragenden Struktur. Die wenigstens eine Befestigungsvorrichtung leitet wenigstens einen Teil der Lasten des Photovoltaik-Moduls in die Fassadenplatte ein und die Fassadenplatte leitet den wenigstens einen Teil der Lasten des Photovoltaik-Moduls in die Unterkonstruktion ein.

In einem anderen Beispiel ist ein Verfahren zur Befestigung von Photovoltaik-Modulen im Fassadenbereich vorgesehen. Das Verfahren weist die folgenden Schritte auf: Vorsehen wenigstens einer keramischen Fassadenplatte; Befestigen der wenigstens einen keramischen Fassadenplatte an einer Unterkonstruktion, die an einer tragenden Struktur eines Gebäudes befestigt ist; Vorsehen wenigstens eines Photovoltaik-Moduls; und Befestigen des wenigstens einen Photovoltaik-Moduls an der tragenden Struktur über die Unterkonstruktion. Randbereiche der Photovoltaik-Module werden mit einem Fassadenhalteprofil gehalten, das einen ersten Haltebereich, der mit einer Aufnahme für die Photovoltaik-Module ausgebildet ist, und einen zweiten Haltebereich aufweist, der dem ersten Haltebereich gegenüber angeordnet ist und der mit einem Vorsprung in die Unterkonstruktion zur Befestigung der keramischen Fassadenplatte eingreift.

In einem weiteren Beispiel ist ein Verfahren zur Befestigung von Photovoltaik-Modulen im Fassadenbereich vorgesehen. Das Verfahren weist die folgenden Schritte auf: Vorsehen wenigstens einer keramischen Fassadenplatte; Befestigen der wenigstens einen keramischen Fassadenplatte an einer Unterkonstruktion, die an einer tragenden Struktur eines Gebäudes befestigt ist; Vorsehen wenigstens eines Photovoltaik-Moduls; und nachträgliches Befestigen des wenigstens einen Photovoltaik-Moduls an der tragenden Struktur über die Unterkonstruktion in montiertem Zustand des Fassadensystems.

In einem noch weiteren Beispiel ist ein Verfahren zur Befestigung von Photovoltaik-Modulen im Fassadenbereich vorgesehen. Das Verfahren weist die folgenden Schritte auf: Vorsehen wenigstens einer keramischen Fassadenplatte; Befestigen der wenigstens einen keramischen Fassadenplatte an einer Unterkonstruktion, die an einer tragenden Struktur eines Gebäudes befestigt ist; Vorsehen wenigstens eines Photovoltaik-Moduls; und Befestigen des wenigstens einen Photovoltaik-Moduls an der tragenden Struktur über die Unterkonstruktion. Die keramischen Fassadenplatten und die Photovoltaik-Module sind über die gleichen Halterungen gehalten.

In einem Beispiel ist außerdem ein Verfahren zur Befestigung von Photovoltaik-Modulen im Fassadenbereich vorgesehen, das die folgenden Schritte aufweist: Vorsehen wenigstens einer keramischen Fassadenplatte; Befestigen der wenigstens einen keramischen Fassadenplatte an einer Unterkonstruktion, die an einer tragenden Struktur eines Gebäudes befestigt ist; Vorsehen wenigstens eines Photovoltaik-Moduls; und Befestigen des Photovoltaik-Moduls an der tragenden Struktur über die Unterkonstruktion.

In einer Option wird das Photovoltaik-Modul mit wenigstens einer Befestigungsvorrichtung an der Fassadenplatte befestigt. Die wenigstens eine Befestigungsvorrichtung leitet wenigstens einen Teil der Lasten des Photovoltaik-Moduls in die Fassadenplatte ein und die Fassadenplatte leitet den wenigstens einen Teil der Lasten des Photovoltaik-Moduls in die Unterkonstruktion ein.

In einer alternativen oder ergänzenden Option ist wenigstens ein Teil der Photovoltaik-Module als Photovoltaik-Platten ausgebildet und die Photovoltaik-Platten werden direkt an der Unterkonstruktion befestigt. Die Photovoltaik-Platten und die keramischen Fassadenplatten werden an der gleichen Unterkonstruktion befestigt. Die Photovoltaik-Platten und die keramischen Fassadenplatten werden an den gleichen Befestigungsmitteln und Haltern an der Unterkonstruktion befestigt.

In einem Beispiel ist ein Verfahren zur Befestigung von Photovoltaik-Modulen im Fassadenbereich vorgesehen. Das Verfahren weist die folgenden Schritte auf: Vorsehen wenigstens einer keramischen Fassadenplatte; Befestigen der wenigstens einen keramische Fassadenplatte an einer Unterkonstruktion; Vorsehen wenigstens eines Photovoltaik-Moduls; und Befestigen des Photovoltaik-Moduls mit wenigstens einer Befestigungsvorrichtung an der Fassadenplatte. Die wenigstens eine Befestigungsvorrichtung leitet wenigstens einen Teil der Lasten des Photovoltaik-Moduls in die Fassadenplatte ein und die Fassadenplatte leitet den wenigstens einen Teil der Lasten des Photovoltaik-Moduls in die Unterkonstruktion ein.

Gemäß einem grundlegenden Aspekt wird Photovoltaik in der Fassade vorgesehen, um weitere Flächen zur Nutzung von Photovoltaik zur Verfügung zu stellen. Durch die Kombination mit keramischen Fassadenplatten wird eine Fassadenkonstruktion ermöglicht, die auf bewährte und ausgereifte Fassadensysteme zurückgreifen kann. Die Fassadenkonstruktion ist dann in der Lage alle kritischen Anschlusspunkte einer Fassade und insbesondere Sonderfälle abzudecken. Die Photovoltaik-Module lassen sich in Standardgrößen einsetzen, die unter anderem auch konstruktionsbedingt sind, während die Keramikfassade, also der Teil mit den keramischen Fassadenplatten, die Anpassung an die unterschiedlichsten Maße ermöglicht.

Gemäß einem ersten Aspekt werden die Keramikplatten als tragende Elemente für die Photovoltaik-Module verwendet. In die Keramikplatten werden insbesondere Druckkräfte eingeleitet und über die Keramikplatten an die Unterkonstruktion weitergeleitet. Die Halterung der Photovoltaik-Module bedingt daher keine separate Unterkonstruktion in der Fassade, die zusätzlich zu der Unterkonstruktion für die Keramikplatten notwendig wäre. Die Keramikplatten ermöglichen eine Anpassung an verschiedene Maße, während die Photovoltaik-Module beispielsweise in Standardmodulgrößen eingesetzt werden können.

Gemäß einem zweiten Aspekt wird für die Keramikplatten und die Photovoltaik-Module die gleiche Unterkonstruktion verwendet. Die Halterung der Photovoltaik-Module bedingt daher keine separate Unterkonstruktion in der Fassade, die zusätzlich zu der Unterkonstruktion für die Keramikplatten notwendig wäre. Ein und dieselbe Unterkonstruktion dient beiden Bereichen, die damit nebeneinander und austauschbar in der Fassade angeordnet werden können. Die Keramikplatten ermöglichen eine Anpassung an verschiedene Maße, z.B. in Randbereichen, während die Photovoltaik-Module beispielsweise in Standardmodulgrößen eingesetzt werden können. Die Keramikplatten können aufgrund ihrer Anpassbarkeit in der Größe an diese Standardmodulgrößen der Photovoltaik-Module angepasst werden.

Es sei darauf hingewiesen, dass die Merkmale der Ausführungsbeispiele der Fassadenverkleidung auch für Ausführungsformen des Fassadensystems und des Verfahrens gelten und umgekehrt. Außerdem können auch diejenigen Merkmale frei miteinander kombiniert werden, bei denen dies nicht explizit erwähnt ist.

### KURZE BESCHREIBUNG DER ZEICHNUNGEN

Nachfolgend wird anhand der beigefügten Zeichnungen näher auf Ausführungsbeispiele der Erfindung eingegangen.
Fig. 1 zeigt einen schematischen Vertikalschnitt durch ein Beispiel einer Fassadenverkleidung in einem an einer vorgehängten Fassadenkonstruktion befestigten Zustand.
Fig. 2 zeigt ein weiteres Beispiel einer Fassadenverkleidung in einem Vertikalschnitt mit Photovoltaik-Modulen, die an keramischen Fassadenplatten befestigt sind.
Fig. 3 zeigt einen Ausschnitt einer Ansicht einer Fassadenverkleidung mit mehreren keramischen Fassadenplatten und daran befestigten Photovoltaik-Modulen.
Fig. 4 zeigt ein Beispiel für ein Verfahren zur Befestigung von Photovoltaik-Modulen im Fassadenbereich in den wesentlichen Verfahrensschritten.
Fig. 5 zeigt ein weiteres Beispiel einer Fassadenverkleidung in einem Vertikalschnitt mit Photovoltaik-Modulen, die an keramischen Fassadenplatten eingehängt befestigt sind.
Fig. 6 zeigt ein weiteres Beispiel einer Fassadenverkleidung in einem Vertikalschnitt mit Photovoltaik-Modulen, die an keramischen Fassadenplatten befestigt sind.
Fig. 7 zeigt ein Beispiel einer Fassadenverkleidung in einem Vertikalschnitt, bei dem Photovoltaik-Module in Vertiefungen von keramischen Fassadenplatten befestigt sind.
Fig. 8 zeigt in einem Vertikalschnitt ein weiteres Beispiel einer Fassadenverkleidung mit an keramischen Fassadenplatten gehaltenen Photovoltaik-Modulen.
Fig. 9 zeigt in einem Vertikalschnitt ein Beispiel einer Fassadenverkleidung, bei der die Photovoltaik-Module an den Plattenrändern eingehängt sind.
Fig. 10 zeigt in einem Vertikalschnitt ein weiteres Beispiel einer Fassadenverkleidung, bei dem die Befestigung der Photovoltaik-Module in Stoßbereichen benachbarter Platten erfolgt und wenigstens ein Teil der Lasten der Photovoltaik-Module in die keramischen Fassadenplatten eingeleitet wird.
Fig. 11 zeigt das Beispiel aus Fig. 10 in einem vergrößerten Ausschnitt.
Fig. 12 zeigt das Beispiel aus Fig. 10, bzw. Fig. 11, während des Einsetzens einer Halterung für die Befestigung der Photovoltaik-Module.
Fig. 13a zeigt in einem Vertikalschnitt ein weiteres Beispiel, bei dem die Befestigung der Photovoltaik-Module in Stoßbereichen benachbarter Platten mit einer durch Drehen einsetzbaren Halterung erfolgt und wenigstens ein Teil der Lasten der Photovoltaik-Module in die keramischen Fassadenplatten eingeleitet wird.
Fig. 13b zeigt eine isometrische Skizze der Halterung.
Fig. 13c zeigt einen Schnitt durch einen Steg der Halterung aus Fig. 13b.
Fig. 14 zeigt einen Vertikalschnitt eines Fassadensystems mit Photovoltaik-Modulen und keramischen Fassadenplatten.
Fig. 15 zeigt ein weiteres Beispiel eines Fassadensystems in einer Ansicht.
Fig. 16 zeigt einen ersten Vertikalschnitt durch das Fassadensystem aus Fig. 15.
Fig. 17 zeigt einen zweiten Vertikalschnitt durch das Fassadensystem aus Fig. 15.
Fig. 18 zeigt einen ersten Horizontalschnitt durch das Fassadensystem aus Fig. 15.
Fig. 19 zeigt einen zweiten Horizontalschnitt durch das Fassadensystem aus Fig. 15.
Fig. 20 zeigt einen dritten Horizontalschnitt durch das Fassadensystem aus Fig. 15.
Fig. 21 zeigt ein Beispiel einer mit Photovoltaik-Modulen nachrüstbaren Fassade in einer Ansicht in einem Ausgangszustand (oben) und einem teilweise mit Photovoltaik-Modulen nachgerüsteten Zustand (unten).
Fig. 22 zeigt ein weiteres Beispiel einer mit Photovoltaik-Modulen nachrüstbaren Fassade in einer Ansicht und einem Schnitt (Ausschnitt).
Fig. 23 zeigt ein Detail aus Fig. 22.
Fig. 24 zeigt eine Variante zu Fig. 23 bzw. Fig. 22.
Fig. 25 zeigt ein weiteres Beispiel einer mit Photovoltaik-Modulen nachrüstbaren Fassade in einer Ansicht und einem Schnitt (Ausschnitt).
Fig. 26 zeigt eine erste Variante zu Fig. 25.
Fig. 27 zeigt eine zweite Variante zu Fig. 25.
Fig. 28 zeigt ein weiteres Beispiel einer mit Photovoltaik-Modulen nachrüstbaren Fassade in einer Ansicht und einem Schnitt (Ausschnitt).
Fig. 29 zeigt einen Horizontalschnitt.
Fig. 30 zeigt einen unteren Bereich zu Fig. 28 in einer Ansicht und einem Schnitt (Ausschnitt).

### DETAILLIERTE BESCHREIBUNG VON AUSFÜHRUNGSFORMEN

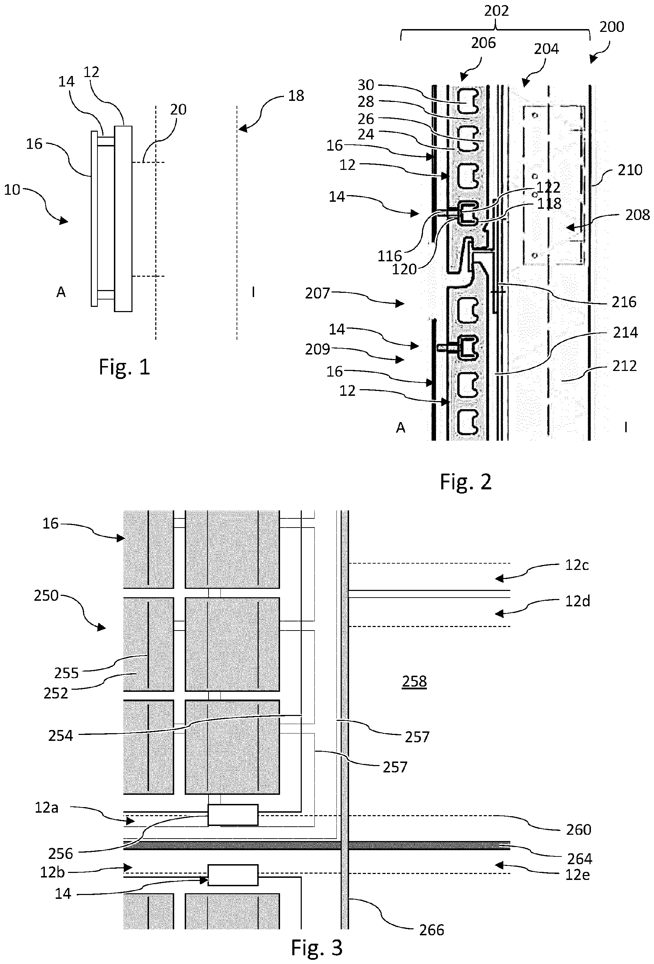

Fig. 1 zeigt einen schematischen Vertikalschnitt durch ein Beispiel einer Fassadenverkleidung 10 in einem an einer vorgehängten Fassadenkonstruktion befestigten Zustand. Die Fassadenverkleidung 10 weist wenigstens eine keramische Fassadenplatte 12 und wenigstens eine Befestigungsvorrichtung 14 für wenigstens ein Photovoltaik-Modul 16 auf. Das Photovoltaik-Modul 16 kann mit der wenigstens einen Befestigungsvorrichtung 14 an der Fassadenplatte 12 befestigt werden. Die wenigstens eine Befestigungsvorrichtung 14 ist ausgebildet, wenigstens einen Teil der Lasten des Photovoltaik-Moduls 16 in die Fassadenplatte 12 einzuleiten und die Fassadenplatte 12 ist ausgebildet, den wenigstens einen Teil der Lasten des Photovoltaik-Moduls 16 in eine Unterkonstruktion 18 einzuleiten, die mit gestrichelter Linie als Option dargestellt ist.

Mit gestrichelter Linie sind auch (Fassaden-) Halterungen 20 der keramischen Fassadenplatten 12 als Option angedeutet. Der Fassadenaufbau trennt beispielsweise einen Innenraum *I* eines nicht näher gezeigten Gebäudes von einem Außenraum *A.* Die dem Außenraum A zugewandten Fassadenaußenseite ist beispielsweise zumindest teilweise von der Sonne beschienen, um so mittels der Photovoltaik-Module Lichteinstrahlung in elektrische Energie umzuwandeln und zur Verfügung zu stellen.

Fig. 2 zeigt ein weiteres Beispiel der Fassadenverkleidung 10 in einem Vertikalschnitt mit den Photovoltaik-Modulen 16, die an den keramischen Fassadenplatten 12 befestigt sind. Die Fassadenverkleidung 10 ist insbesondere für eine vorgehängte hinterlüftete Fassadenkonstruktion vorgesehen. In dem in Fig. 2 gezeigten Beispiel weist die keramische Fassadenplatte 12 einen Plattenkörper 22 aus keramischem Werkstoff auf. Der Plattenkörper 22 kann auch als Plattenstruktur, Grundkörper oder Grundstruktur bezeichnet werden.

In Fig. 2 ist als Option auch ein Fassadensystem 200 gezeigt. Das Fassadensystem 200 weist eine vorgehängte Fassadenkonstruktion 202 auf. Die vorgehängte Fassadenkonstruktion 202 weist eine Unterkonstruktion 204 zur Befestigung an einer tragenden Struktur und eine Verkleidung 206 auf, die an der Unterkonstruktion 204 befestigbar ist, bzw. die in dem gezeigten Beispiel die an der Unterkonstruktion 204 befestigt ist. Die Verkleidung weist keramische Fassadenplatten 207 aufweist, die an der Unterkonstruktion befestigt sind. Die Verkleidung weist außerdem auch Photovoltaik-Module 209 auf, die über die Unterkonstruktion an der tragenden Struktur befestigt sind.

In dem in Fig. 2 gezeigten Beispiel ist als Option wenigstens ein Teil der Verkleidung 206 als Fassadenverkleidung nach einem der oberhalb und im Folgenden beschriebenen und gezeigten Beispiele der Fassadenverkleidung 10 ausgebildet.

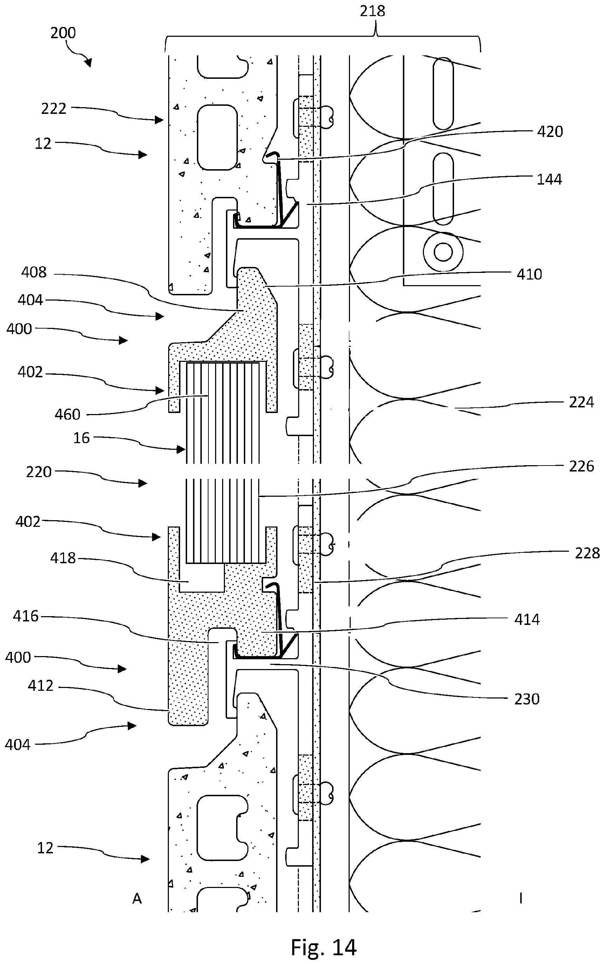

In einem weiteren, in Fig. 14 angedeuteten Beispiel ist wenigstens ein Teil der Verkleidung als Fassadenverkleidung nach einem der Beispiele mit einem Fassadenhalteprofile (siehe Fig. 14) ausgebildet.

Die Photovoltaik-Module 209 sind zumindest teilweise mittels der keramischen Fassadenplatten 207 über die Unterkonstruktion an der tragenden Struktur befestigt.

Die Unterkonstruktion 204, die auch als Unterkonstruktion bezeichnet wird, weist beispielsweise eine Haltestruktur 208 auf, die an einer tragenden Gebäudestruktur 210 gehalten ist. Die Unterkonstruktion 204 zur Befestigung der Fassadenplatten 12 weist beispielsweise horizontale und/oder vertikale Profile auf. In einem Beispiel weist das Fassadensystem einen Wandaufbau mit einer wärmedämmenden Schicht auf. Beispielsweise ist im Bereich der Haltestruktur 208 eine Dämmschicht 212 ausgebildet. Zwischen der Verkleidung 206 und der Dämmschicht 212 ist beispielsweise ein Abstand 214 vorhanden, der als Hinterlüftung vorgesehen ist.

Die keramischen Fassadenplatten 12 sind in Fig. 2 mit Halterungen 216 an der Haltestruktur 208 der vorgehängten Fassadenkonstruktion 202 montiert. Beispielsweise stehen die keramischen Fassadenplatten 12 am unteren Rand auf den Halterungen 216 in einer dafür vorgesehenen Nut auf, und sind am oberen Rand in einer Nut in horizontaler Richtung gehalten.

In dem gezeigten Beispiel ist die vorgehängte Fassadenkonstruktion 202 Teil eines Wandaufbaus einer Gebäudehülle. Der Wandaufbau weist außerdem die Hinterlüftung der Fassadenplatten auf, und die Wärmedämmung. Die Hinterlüftung der Fassadenplatten ist zwischen den Fassadenplatten und der Wärmedämmung angeordnet. Das Fassadensystem 200 bildet mit den Photovoltaik-Modulen 16 eine Fassade zur solaren Energienutzung.

In einem Beispiel ist das Photovoltaik-Modul 16 mit der Befestigungsvorrichtung 14 an der Fassadenplatte 12 montiert. Mit anderen Worten, die Fassadenverkleidung 10 weist die wenigstens eine keramische Fassadenplatte 12, die wenigstens eine Befestigungsvorrichtung 14 und das wenigstens eine Photovoltaik-Modul 16 auf. Die wenigstens eine Befestigungsvorrichtung 14 leitet wenigstens einen Teil der Lasten des Photovoltaik-Moduls 16 in die Fassadenplatte 12 ein und die Fassadenplatte 12 leitet den wenigstens einen Teil der Lasten des Photovoltaik-Moduls 16 in die Unterkonstruktion ein.

In einem Beispiel ist die wenigstens eine Befestigungsvorrichtung ausgebildet, die Lasten des Photovoltaik-Moduls ausschließlich in die Fassadenplatte einzuleiten.

In einem Beispiel sind zur Befestigung eines Photovoltaik-Moduls mehrere Befestigungsvorrichtungen vorgesehen. In einem anderen Beispiel sind mehrere Befestigungsvorrichtungen zur Befestigung mehrerer Photovoltaik-Module vorgesehen. In einem anderen Beispiel ist eine Befestigungsvorrichtung zur Befestigung mehrerer Photovoltaik-Moduls vorgesehen.

In dem in Fig. 2 gezeigten Beispiel weist die Fassadenplatte 12 eine vordere Plattenschale 24 und eine hintere Plattenschale 26 auf, die durch Stege 28 miteinander verbunden sind. In der Platte sind Längslöcher 30 vorgesehen, bzw. durch die Stege 28 gebildet. Die Längslöcher 30 sind parallel zu den Stegen 28 zwischen den Stegen 28 angeordnet. Die Längslöcher und Stege sind als Option gezeigt. Die Längslöcher und Stege sind auch für die anderen in den Figuren dargestellten und im Text beschriebenen Beispiele als Option vorgesehen. In Varianten sind die Keramikplatten ohne die Längslöcher und Stege ausgebildet.

Die Längslöcher können auch als längs verlaufende Hohlkammern bezeichnet werden. Die längs verlaufenden Hohlkammern verlaufen in der Plattenebene und können im montierten Zustand vertikal oder horizontal oder auch geneigt angeordnet sein, je nach der Plattenausrichtung in der Fassade.

In einem Beispiel ist eine der keramischen Fassadenplatten 12 und eines der Photovoltaik-Module 16 vorgesehen, das an der einen keramischen Fassadenplatte 12 befestigt werden kann, bzw. im montierten (Gebrauchs-) Zustand an der einen keramischen Fassadenplatte 12 befestigt ist.

In einem anderen Beispiel ist eine der keramischen Fassadenplatten 12 und mehrere der Photovoltaik-Module 16 vorgesehen, die an der einen keramischen Fassadenplatte 12 befestigt werden können, bzw. im montierten (Gebrauchs-) Zustand an der einen keramischen Fassadenplatte 12 befestigt sind. Zum Beispiel sind zwei, drei, vier, fünf, sechs, sieben, acht, neun oder zehn oder mehr der Photovoltaik-Module 16 vorgesehen.

In einem weiteren Beispiel sind mehrere der keramischen Fassadenplatten 12 und mehrere der Photovoltaik-Module 16 vorgesehen, die an den keramischen Fassadenplatten 12 befestigt werden können, bzw. im montierten (Gebrauchs-) Zustand an den keramischen Fassadenplatten 12 befestigt sind. Beispielsweise kann eines der Photovoltaik-Module 16 pro eine der keramischen Fassadenplatten 12 vorgesehen sein, oder es sind mehrere der Photovoltaik-Module 16 pro eine der keramischen Fassadenplatten 12 vorgesehen. In einer Variante ist eine Zuordnung vorgesehen, bei der an einigen der keramischen Fassadenplatten 12 jeweils mehrere der Photovoltaik-Module 16 vorgesehen sind, und bei einigen ist jeweils nur eines der Photovoltaik-Module 16 vorgesehen.

In einer (nicht gezeigten) Variante sind in der Fassade die keramischen Fassadenplatten 12 vorgesehen, denen eines oder mehrere der Photovoltaik-Module 16 zugeordnet sind, d.h. die daran befestigt sind, in Kombination mit keramischen Fassadenplatten, bei denen kein Photovoltaik-Modul vorgesehen ist.

In einer weiteren Variante sind diejenigen keramischen Fassadenplatten, bei denen kein Photovoltaik-Modul vorgesehen ist, als eine der keramischen Fassadenplatten 12 nach einem der vorhergehend und im Folgenden beschriebenen Beispiele ausgebildet. Dies ermöglicht zum Beispiel ein nachträgliches Befestigen der Photovoltaik-Module 16.

In einer weiteren Variante sind diejenigen keramischen Fassadenplatten, bei denen kein Photovoltaik-Modul vorgesehen ist, als keramische Fassadenplatten ohne die Möglichkeit der Befestigung von Photovoltaik-Modulen ausgebildet. Dies bietet sich beispielsweise für Fassadenbereiche an, die keinen oder nur einen sehr geringen solaren Eintrag aufweisen.

Gemäß dem gezeigten Beispiel besteht die Fassadenplatte 12 aus einem Ziegelwerkstoff. Als Option ist vorgesehen, dass die Fassadenplatte 12 stranggepresst ist. Die Fassadenplatte 12, bzw. der Plattenkörper 22 ist zum Beispiel aus einem gebrannten Tonwerkstoff hergestellt. Als weitere Option ist vorgesehen, dass die Fassadenplatte 12 als großformatige Ziegelplatte ausgebildet ist. Der Begriff "großformatig" bezieht sich beispielsweise auf eine Länge von mindestens 600 mm und eine Breite von mindestens 150 mm. Zum Beispiel ist eine Länge von mindestens 1000 mm und eine Breite von mindestens 250 mm, beispielsweise von 400 mm vorgesehen.

Fig. 2 zeigt als Option, dass die Befestigungsvorrichtung 14 Halterungen 116 aufweist, die in ein Längsloch 118 eingreifen, z.B. punktuell oder streifenförmig oder linear durchgehend. Die Halterung 116 ragt beispielsweise durch eine Durchgangsbohrung 120 in den Bereich des Längsloch 118 hinein. In dem Längsloch 118 ist ein Gegenhalter 122 angeordnet, mit dem die Halterung 116 verbunden ist, um das Photovoltaik-Modul 16 an der keramischen Fassadenplatte 12 zu befestigen. Das Photovoltaik-Modul 16 ist beispielsweise mit einem Glas als Grundträger ausgebildet. In einem Beispiel werden die Gegenhalter 122 seitlich in die Platte eingeschoben. In einem anderen Beispiel sind Fixierelemente vorgesehen, die seitlich in die Gegenhalter 122 eingeführt werden, um so die Halterungen 116 in den Gegenhaltern 122 zu fixieren.

In einer Option, die nicht näher gezeigt ist, weist die Fassadenplatte an der Außenseite Profilierungen auf, die als Hervorhebungen ausgebildet sind, an denen die Photovoltaik-Module befestigt werden können.

Varianten hiervon eignen sich, insofern die Photovoltaik-Modulgröße direkt an das Plattenformat gekoppelt ist, insbesondere für größere Keramikplatten.

In einer weiteren Option weist die Fassadenplatte Ausnehmungen für das Zusammenwirken mit der wenigstens einen Befestigungsvorrichtung auf. Die Ausnehmungen sind in einer Option zum Beispiel als linear ausgebildete Vertiefungen auf der Außenseite der Fassadenplatten vorgesehen.

Die Ausnehmungen sind vorgesehen zur Aufnahme von Halterungen für die Befestigung des wenigstens einen Photovoltaik-Moduls. Alternativ oder ergänzend sind die Ausnehmungen vorgesehen zum Eingriff von Halterungen für die Befestigung des wenigstens einen Photovoltaik-Moduls.

Beispielsweise weist die Halterung eine Lasche auf, die im Eingriff mit der Ausnehmung steht. Das Photovoltaik-Modul ist an der Halterung befestigt.

In einer (nicht gezeigten) alternativen Option sind die Ausnehmungen als punktuell ausgebildete Vertiefungen auf der Außenseite der Fassadenplatte vorgesehen, zum Beispiel als eine Vielzahl von Vertiefungen.

In einer Option weisen die Ausnehmungen Bereiche auf, die, bezogen auf eine Senkrechte zur Erstreckung der Fassadenplatte, eine Hinterschneidung zum Hintergreifen der wenigstens einen Befestigungsvorrichtung bilden, zum Beispiel mit der Lasche.

In einer weiteren Option kann die Fassadenplatte statt der Profilierungen oder in Ergänzung dazu, Aufdickungen aufweisen. Die Ausnehmungen sind zum Beispiel in den Aufdickungen vorgesehen.

In einem Beispiel hat die Fassadenplatte auf einer nach außen weisenden Seite einen zentralen flächigen Bereich. Der flächige Bereich ist vorzugsweise eben. Der flächige Bereich kann glatt oder strukturiert ausgebildet sein.

Fig. 3 zeigt einen Ausschnitt einer Ansicht 250 der Fassadenverkleidung 10 mit mehreren der keramischen Fassadenplatten 12 und den daran mit den Befestigungsvorrichtungen 14 befestigten Photovoltaik-Modulen 16. In Fig. 3 sind beispielhaft unterschiedliche Größen der keramischen Fassadenplatten 12 dargestellt.

Beispielsweise ist in der Fig. 3 links ein Bereich einer größeren keramischen Fassadenplatte 12a gezeigt, und darunter ein Bereich einer weiteren, ebenfalls größeren keramischen Fassadenplatte 12b. In der Fig. 3 ist rechts oben ein Bereich einer in der Höhe kleineren keramischen Fassadenplatte 12c gezeigt. In der Mitte rechts ist ein Bereich einer weiteren, ebenfalls in der Höhe kleineren keramischen Fassadenplatte 12d gezeigt, und darunter ein Bereich einer weiteren, ebenfalls in der Höhe kleineren keramischen Fassadenplatte 12e.

Die Photovoltaik-Module 16 sind beispielhaft als beabstandete Solarzellen 252 ausgebildet, die auf einem Glas 254 als Grundträger mit Abstand vor den keramischen Fassadenplatten 12 gehalten sind. Für die Solarzellen 252 sind charakteristische Leiterbahnen 255 angedeutet. Die Befestigungsvorrichtungen 14 sind zum Beispiel als Glashalter 256 ausgebildet, die an den keramischen Fassadenplatten 12 befestigt sind.

Mit gestrichelten Linien ist ein Schattenwurf 257 angedeutet, der sich durch die beabstandet gehaltenen Solarzellen 252 ergibt.

Die keramischen Fassadenplatten 12 sind zum Beispiel mit zentralen flachen Bereichen 258 ausgebildet. In den Randzonen sind mit gestrichelten Linien 260 die in der Platte angeordneten Haltevorrichtungen angedeutet. Zwischen benachbarten Fassadenplatten 12 sind horizontale Fugen 264 gezeigt. Wenn der Stoßbereich der benachbarten Fassadenplatten 12 im Bereich der horizontalen Fugen 264 beispielsweise einen Versatz aufweist, können die Fugen 264 nach außen offen ausgebildet sein, d.h. unverdeckt bleiben. Vertikale Fugen können mit einem Profil 266 abgedeckt sein.

In einer nicht gezeigten Variante sind die keramischen Fassadenplatten 12 mit den zentralen flachen Bereichen 258 und in den Randzonen angeordneten linearen Hervorhebungen ausgebildet. Die Hervorhebungen weisen zum Beispiel eine lineare Vertiefung auf, zum Beispiel eine Nut oder eine Rille, zur Aufnahme und Befestigung beispielsweise der Glashalter 256.

Das Photovoltaik-Modul 16 weist einen flachen Grundkörper auf, der eine Vielzahl photovoltaischer Elemente trägt. Der flache Grundkörper besteht zum Beispiel aus einem Glaswerkstoff.

In einem Beispiel ist die Photovoltaik auf einer selbsttragenden Platte angeordnet, zum Beispiel auf einem Glas. In einem weiteren Beispiel ist die Photovoltaik auf einer dünnen Platte angeordnet, zum Beispiel auf einem Blech.

In einem Beispiel ist das Photovoltaik-Modul 16 als rahmenloses Glas-Glas-Laminat vorgesehen, das mehrere poly- oder monokristalline Solarzellen trägt. Die Größenschritte sind in Abhängigkeit von der gewählten Zellengröße und deren Abstand zueinander bei der Fertigung der Solarzellen einstellbar. Das rahmenlose Glas-Glas-Laminat ermöglicht eine Anordnung von Photovoltaik und Ziegelflächen voreinander. Das Prinzip ist hier die Anordnung der Photovoltaik-Module in einer zweiten Ebene vor der Keramikfassade, um z.B. ein farbliches und strukturelles Zusammenspiel der Materialen zu erzeugen. Daraus ergeben sich als Optionen für die Gestaltung die Varianz der Farbe, der Zellengröße (Körnung) bzw. der Abstände und somit der Grad der Durchsicht auf die dahinter liegende Ebene. Hinzu kommt die reichhaltige heterogene Zeichnung bei Polykristallinen Zellen. Die Anforderungen an die Konstruktion werden bestimmt durch vergleichsweise hohe Lasten, die auf geeignete Art und Weise zumindest teilweise über die Keramik in die Unterkonstruktion eingebracht werden. Hinzu kommt die maßliche Abstimmung der Überlagerung der beiden Systeme.

In einem anderen Beispiel ist das Photovoltaik-Modul 16 als Folienlaminat auf geeignetem Trägermaterial ausgebildet, z.B. Blech, 3mm. Die Solarzellen sind als Dünnschichtzellen aufgebracht, zum Beispiel als organische Photovoltaikelemente. Für die Größenanpassbarkeit sind zumeist schmale Streifen variabler Länge vorgesehen. Das Folienlaminat ermöglicht eine Anordnung von Photovoltaik und Ziegelflächen ineinander. Das Prinzip sind hier kleinformatige tendenziell streifenartige Photovoltaik-Flächen, ähnlich den Keramikplatten selbst, die als Intarsie auf bzw. in einer Keramikplatte "liegen". Daraus ergibt sich als Option für die Gestaltung eine farbige Photovoltaik-Fläche, die von dem darauf abgestimmten Farbton der Keramik umschlossen wird, sodass die unmittelbar dahinter befindliche Keramikplatte als solche präsent bleibt. Die Anforderungen an die Konstruktion werden bestimmt durch ein leichtes, flexibles Modul mit relativ geringer Lebensdauer, das dementsprechend in kürzeren Abständen ausgetauscht werden muss und sich in seinem Format auf die Keramikplatte bezieht.

In einem anderen Beispiel ist das Photovoltaik-Modul 16 als gerahmtes Glas-Glas Laminat ausgebildet. Die Solarzellen sind als Dünnschichtzellen aufgebracht, zum Beispiel als sogenannte CIGS-Solarzellen, deren Absorber den Werkstoff Kupfer-Indium-Gallium-Diselenid aufweist. Für die Größenanpassbarkeit sind stufenlos herstellbare Größen durch flächigen Auftrag des Materials vorgesehen. Das Prinzip ist hier die Belegung der innerhalb einer durch ein Raster gegliederten Fassade und die entstehenden Felder mit verschiedenen Materialitäten und Funktionen. Daraus ergibt sich als Option für die Gestaltung eine gerahmte opake homogene und reflektierende Fläche, die sich entweder farblich zurückhaltend oder kontrastierend ausbilden lässt und die sich in analoger Weise zu Fenstern, Türen und sonstigen Formaten in der Fassade einordnet. Die Anforderungen an die Konstruktion werden bestimmt durch Rahmen bestehend aus Profilen variabler Länge, die sich, passend zu den Regelgrößen der Keramikplatten, zu verschieden großen Elementen zusammenbauen lassen.

In einem weiteren, nicht gezeigten Beispiel ist vorgesehen, dass an der Fassadenplatte mehrere der Photovoltaik-Module 16 nebeneinander mit Zwischenabstand zueinander und mit Halteabstand zu der Fassadenplatte befestigbar sind. Die eine oder mehrere Fassadenplatten 12 weisen eine helle Oberfläche auf. Die Photovoltaik-Module 12 weisen eine zweiseitig aktive Wirkschicht zur Stromerzeugung auf, so dass in den Zwischenabstand eindringende solare Strahlung von der hellen Oberfläche an die Rückseite der Photovoltaik-Module 16 reflektierbar ist und mit den Photovoltaik-Modulen 16 beidseitig Strom erzeugt werden kann.

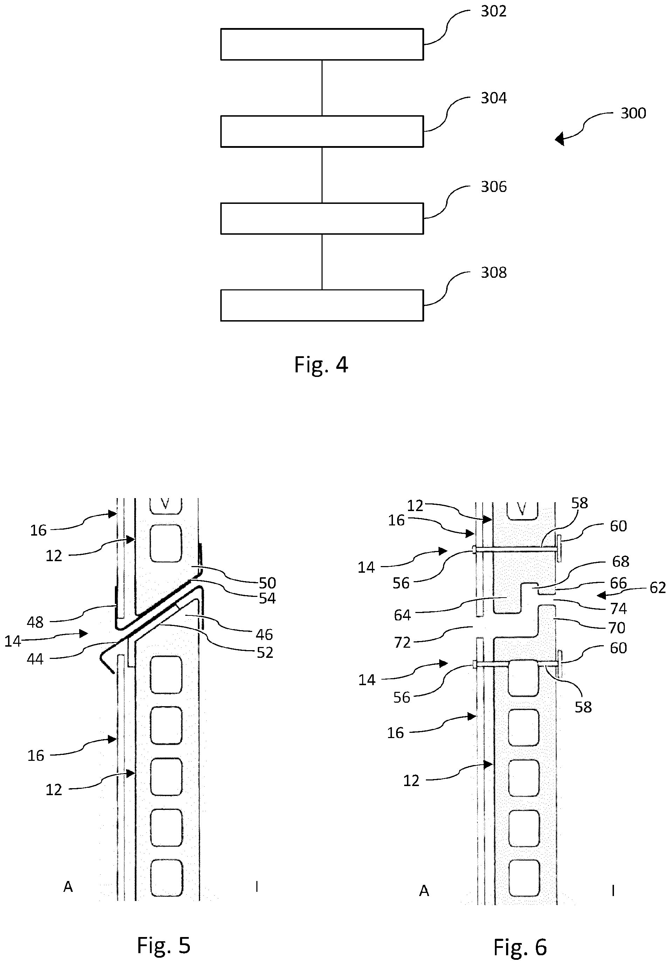

Fig. 4 zeigt ein Beispiel für ein Verfahren 300 zur Befestigung von Photovoltaik-Modulen im Fassadenbereich in den wesentlichen Verfahrensschritten. Das Verfahren 300 weist folgende Schritte auf:
- In einem ersten Schritt 302 wird wenigstens eine keramische Fassadenplatte vorgesehen.
- In einem zweiten Schritt 304 wird die wenigstens eine keramische
Fassadenplatte an einer Unterkonstruktion befestigt, die an einer tragenden Struktur eines Gebäudes befestigt ist.
- In einem dritten Schritt 306 wird wenigstens ein Photovoltaik-Modul vorgesehen.
- In einem vierten Schritt 308 wird das wenigstens eine Photovoltaik-Modul an der tragenden Struktur über die Unterkonstruktion befestigt.

In einer Option wird das Photovoltaik-Modul mit wenigstens einer Befestigungsvorrichtung an der Fassadenplatte befestigt und die wenigstens eine Befestigungsvorrichtung leitet wenigstens einen Teil der Lasten des Photovoltaik-Moduls in die Fassadenplatte ein und die Fassadenplatte leitet den wenigstens einen Teil der Lasten des Photovoltaik-Moduls in die Unterkonstruktion ein.

In einer weiteren Option werden Randbereiche der Photovoltaik-Module mit einem Fassadenhalteprofil gehalten, das einen ersten Haltebereich, der mit einer Aufnahme für die Photovoltaik-Module ausgebildet ist, und einen zweiten Haltebereich aufweist, der dem ersten Haltebereich gegenüber angeordnet ist und der mit einem Vorsprung in die Unterkonstruktion zur Befestigung der keramischen Fassadenplatte eingreift.

In einer weiteren Option erfolgt das Befestigen des wenigstens einen Photovoltaik-Moduls nachträglich in montiertem Zustand des Fassadensystems.

In einer weiteren Option werden die keramischen Fassadenplatten und die Photovoltaik-Module über die gleichen Halterungen gehalten.

Gemäß einem nicht gezeigten Beispiel wird das Photovoltaik-Moduls mit wenigstens einer Befestigungsvorrichtung an der Fassadenplatte befestigt, wobei die wenigstens eine Befestigungsvorrichtung wenigstens einen Teil der Lasten des Photovoltaik-Moduls in die Fassadenplatte einleitet und die Fassadenplatte den wenigstens einen Teil der Lasten des Photovoltaik-Moduls in die Unterkonstruktion einleitet.

Gemäß einem weiteren nicht gezeigten Beispiel ist wenigstens ein Teil der Photovoltaik-Module als Photovoltaik-Platten ausgebildet ist und die Photovoltaik-Platten werden direkt an der Unterkonstruktion befestigt.

In einer Option werden die Photovoltaik-Platten und die keramischen Fassadenplatten an der gleichen Unterkonstruktion befestigt.

In einer weiteren Option werden die Photovoltaik-Platten und die keramischen Fassadenplatten mit den gleichen Befestigungsmitteln und Haltern an der Unterkonstruktion befestigt.

Fig. 5 zeigt ein weiteres Beispiel der Fassadenverkleidung 10 in einem Vertikalschnitt mit den Photovoltaik-Modulen 16, die an den keramischen Fassadenplatten 12 eingehängt befestigt sind. Fig. 5 zeigt ein Beispiel, bei dem die Befestigungsvorrichtung 14 eine erste Halterung 44 aufweist, die an einem oberen Rand 46 der Fassadenplatte 12 befestigt ist. Beispielsweise kann die erste Halterung 44 an dem oberen Rand 46 der Fassadenplatte 12 eingehängt werden. Die erste Halterung 44 kann beispielsweise eine gekantete Lasche oder ein gekantetes Blech aufweisen, um so die vertikale und horizontale Last des Photovoltaik-Moduls 16 am oberen Rand der Fassadenplatte 12 in diese einzuleiten.

Fig. 5 zeigt als weiteres Beispiel, dass die Befestigungsvorrichtung 14 eine zweite Halterung 48 aufweist, die an einem unteren Rand 50 der Fassadenplatte 12 befestigt ist. Beispielsweise kann die zweite Halterung 48 an dem unteren Rand 50 der Fassadenplatte 12 eingehängt werden. Die zweite Halterung 48 kann beispielsweise ebenfalls eine gekantete Lasche oder ein gekantetes Blech aufweisen, um so vorwiegend die horizontale Last des Photovoltaik-Moduls 16 am unteren Rand 50 der Fassadenplatte 12 in diese einzuleiten.

Das Einhängen bietet sich beispielsweise bei einem Photovoltaik-Modul 16 mit einem Blech oder einem vergleichbaren Panel als Grundträger an.

Die Fassadenplatte 12 kann beispielsweise mit einem von innen nach außen schräg nach unten verlaufenden oberen Rand 52 und unteren Rand 54 ausgebildet sein, damit Schlagregen besser nach außen abgeführt werden. Diese Option ist auch für andere Befestigungen der Photovoltaik-Module 16 an den keramischen Fassadenplatten 12 vorgesehen.

Fig. 6 zeigt ein weiteres Beispiel der Fassadenverkleidung 10 mit den Photovoltaik-Modulen 16, die an den keramischen Fassadenplatten 12 befestigt sind. Beispielsweise weisen die Photovoltaik-Module 16 eine Glasplatte, z.B. ein Verbundsicherheitsglas (VSG) als Trägerplatte auf. Die Glasplatte ist mit punktförmigen Haltern 56 an den keramischen Fassadenplatten 12 befestigt. Die punktförmigen Halter 56 sind zum Beispiel stiftartige Elemente 58, die durch die keramischen Fassadenplatten 12 hindurchragen und auf der Rückseite der keramischen Fassadenplatten 12 mit einem Gegenlager 60 gehalten sind.

Fig. 6 zeigt als weitere Option eine Falzausbildung 62 der benachbarten Fassadenplatten, die auch für andere Befestigungen der Photovoltaik-Module 16 an den keramischen Fassadenplatten 12 vorgesehen ist. Die obere der beiden Fassadenplatten 12 weist am unteren Rand einen vorderen Fußfalz 64 und einen hinteren Fußfalz 66 auf. Zwischen den beiden ist eine Fußnut 68 ausgebildet. Die untere der beiden Fassadenplatten 12 weist am oberen Rand einen hinteren Kopffalz 70 auf. Auf der Außenseite (in Fig. 6 nach links hin) ergibt sich eine Außenfuge 72; auf der Innenseite (in Fig. 6 nach rechts hin) ergibt sich eine Innenfuge 74. Die Innenfuge 74 ist beispielsweise kleiner als die Außenfuge 72.

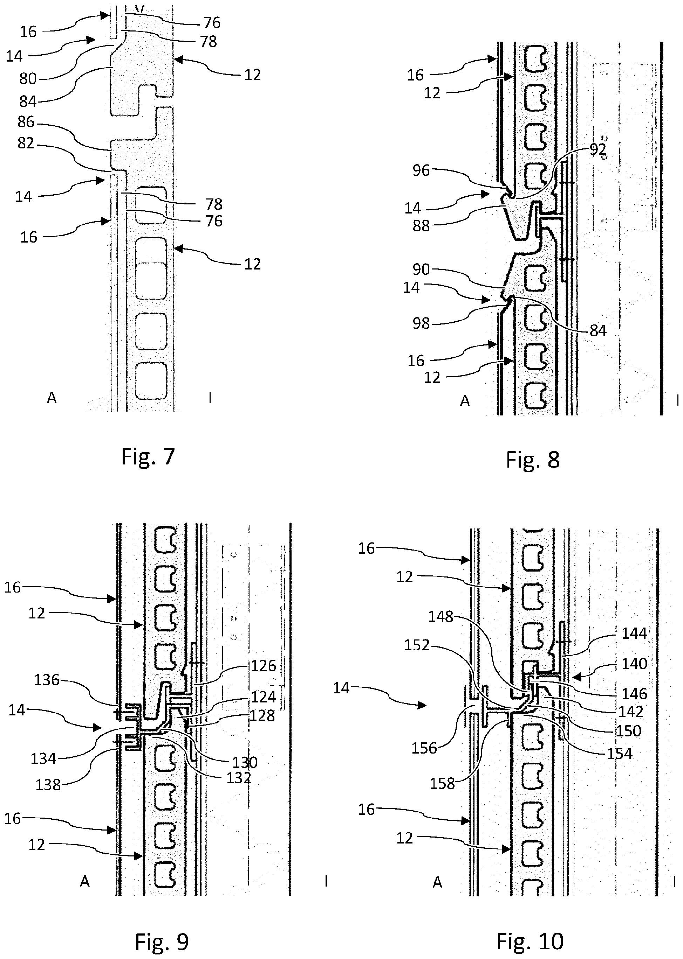

Fig. 7 zeigt ein Beispiel der Fassadenverkleidung 10, bei dem die Photovoltaik-Module 16 in Vertiefungen 76 der keramischen Fassadenplatten 12 befestigt sind. Durch die Vertiefungen 76 ist in den keramischen Fassadenplatten 12 eine Aufnahme gebildet, in der die Photovoltaik-Module 16 zum Beispiel flächenbündig eingesetzt werden können, vorzugsweise mit einer zumindest kleinen Hinterlüftung 78 der Photovoltaik-Module 16. Der Luftstrom für die Abfuhr von Wärme kann zum Beispiel über offene untere Fugenbereiche 80 und offene obere Fugenbereiche 82 gewährleistet werden. Die keramischen Fassadenplatten 12 können mit unteren Randbereichen 84 und oberen Randbereichen 86 ausgebildet werden, bei denen sich bei Bedarf Streifen abtrennen lassen, um eine gegebenenfalls erforderliche Höhenanpassung vornehmen zu können. In Fig. 7 sind bereits angepasste Randbereiche gezeigt. Diese Option ist auch für die anderen Befestigungen der Photovoltaik-Module 16 an den keramischen Fassadenplatten 12 vorgesehen ist.

Fig. 8 zeigt in einem Vertikalschnitt ein weiteres Beispiel der Fassadenverkleidung 10 mit den an den keramischen Fassadenplatten 12 gehaltenen Photovoltaik-Modulen 16. In Fig. 8 ist als Option gezeigt, dass die Fassadenplatte 12 an der Außenseite Profilierungen aufweist. Die keramischen Fassadenplatten 12 weisen am unteren Randbereich untere Hervorhebungen 88 auf und am oberen Randbereich obere Hervorhebungen 90. Die Hervorhebungen 88, 90 bilden jeweils kleine Rillen 92, 94, in denen zum Beispiel Haltelaschen 96, 98 eingeklemmt werden können, die von den Photovoltaik-Modulen 16 abstehen. Die Hervorhebungen 88, 90 bilden zum Beispiel Hinterschneidungen, so dass federnde Haltelaschen geklemmt gehalten werden können.

In einem weiteren, nicht gezeigten Beispiel der Fassadenverkleidung sind die Photovoltaik-Module an den keramischen Fassadenplatten befestigt. Zum Beispiel sind die Fassadenplatten mit der vorderen Plattenschale, der hinteren Plattenschale, den Stegen und den Längslöchern ausgebildet. Als Option ist vorgesehen, dass die Befestigungsvorrichtung eine Abkantung am unteren Randbereich des Photovoltaik-Moduls aufweist, die in ein Längsloch in der keramischen Fassadenplatte eingreift, z.B. punktuell oder streifenförmig oder linear durchgehend. Das Photovoltaik-Modul ist beispielsweise mit einem Blech als Grundträger ausgebildet. Die Abkantung ist zum Beispiel mit einem Klemmbereich ausgebildet, der in das Längsloch eingreift. Zusätzlich ist ein weiteres Halteelement vorgesehen, das ebenfalls teilweise in das Längsloch eingesetzt ist. Die Befestigungsvorrichtung weist auch eine Abkantung am oberen Randbereich des Photovoltaik-Moduls auf, die ebenfalls in ein Längsloch eingreift. Die Abkantung ist zum Beispiel mit einem Klemmbereich ausgebildet, der in das Längsloch eingreift. Zusätzlich kann auch hier ein weiteres Halteelement vorgesehen sein, das ebenfalls teilweise in das Längsloch eingesetzt ist.

Fig. 9 zeigt ein Beispiel der Fassadenverkleidung 10, bei der die Photovoltaik-Module 16 an den oberen Plattenrändern der keramischen Fassadenplatten 12 eingehängt befestigt sind. Am oberen Rand der keramischen Fassadenplatten 12 ist ein innerer Kopffalz 124 ausgebildet. Dieser dient beispielsweise auch für die Befestigung der keramischen Fassadenplatten 12 an der Unterkonstruktion mittels versetzt angeordneter, und daher in Fig. 9 in der Ansicht gezeigter Plattenhalter 126. Für die Befestigung der Photovoltaik-Module 16 ist ein den Kopffalz 124 umgreifendes Profilsegment 128 vorgesehen, das in seiner weiteren Abwicklung einen Stützbereich 130 aufweist, mit dem es sich auf einem oberen Randbereich 132 der unteren keramischen Fassadenplatte 12 abstützt und durch die Fugen zwischen den beiden keramischen Fassadenplatten 12 nach außen ragt. Dort sind an einem Halter 134 ein erster Haltebereich 136 für das obere Photovoltaik-Modul 16 und ein zweiter Haltebereich 138 für das untere Photovoltaik-Modul 16 vorgesehen. Die Befestigung der Photovoltaik-Module 16 an den keramischen Fassadenplatten 12 erfolgt unabhängig von den Plattenhaltern 126, mit denen die keramischen Fassadenplatten 12 an der Unterkonstruktion befestigt sind.

Fig. 10 zeigt ein weiteres Beispiel der Fassadenverkleidung 10, bei dem die Befestigung der Photovoltaik-Module 16 in Stoßbereichen 140 benachbarter Platten erfolgt und wenigstens ein Teil der Lasten der Photovoltaik-Module 16 in die keramischen Fassadenplatten 12 eingeleitet wird. Am oberen Rand der keramischen Fassadenplatten 12 ist ein innerer Kopffalz 142 ausgebildet. Dieser dient hier der Befestigung der keramischen Fassadenplatten 12 an der Unterkonstruktion mittels eines Plattenhalters 144. Für die Befestigung der Photovoltaik-Module 16 weist der Plattenhalter 144 eine nach unten weisende Nut 146 auf. In diese Nut 146 greift eine Lasche 148 einer Halterung 150 ein, die sich in der weiteren Abwicklung mit einem Stützbereich 152 auf einem oberen Randbereich 154 der unteren keramischen Fassadenplatte 12 abstützt und durch die Fugen zwischen den beiden keramischen Fassadenplatten 12 nach außen ragt. Dort können an einem Haltebereich 156 die beiden Photovoltaik-Module 16 befestigt werden. Das Eigengewicht der Photovoltaik-Module 16 wirkt dabei auf den Halter, der die Last über den sich abstützenden Stützbereich 152 an die keramischen Fassadenplatten 12 ableitet. Zusätzlich kann noch eine weitere Lasche 158 an der Halterung 150 vorgesehen sein, um sich an der keramischen Fassadenplatte 12 am oberen Rand auf der Außenseite abzustützen. Die Nut 146 des Plattenhalters 144 übernimmt primär die Aufgabe die Lasche 148 in horizontaler Richtung nach außen hin zu halten, also dem sich ergebenden Kippmoment entgegenzuwirken. Die Befestigung der Photovoltaik-Module 16 erfolgt primär über die keramischen Fassadenplatten 12, und nur teilweise direkt über den Plattenhalter 144.

Die Halterung ist einsetzbar und auch austauschbar, ohne dass dafür die Keramikplatten ausgebaut werden müssen. Dies erlaubt zum Beispiel ein späteres Nachrüsten einer Keramikfassade.

Die Halterung 150 kann an einem Stoßbereich von zwei benachbarten Fassadenplatten 12 mit der Lasche 148 in die Nut 146, d.h. eine Aufnahme der Fassadenhalterung der Fassadenplatten, d.h. des Plattenhalters 144 von unten eingeschoben werden. Die Lasche 148 kann sich an einer vorderen Seitenwand der Nut 146 und an dem oberen Randbereich 154 der unteren Fassadenplatte abstützen, um so das Photovoltaik-Modul 16 zu halten. Wie bereits erwähnt, kann die Befestigungsvorrichtung 14 also eine Halterung aufweisen, die an einem Rand der Fassadenplatte befestigt werden kann.

In einer Abwandlung kann die Halterung an einem Stoßbereich von zwei benachbarten Fassadenplatten mit einer Lasche in eine untere Aufnahme einer oberen Fassadenplatte von unten eingeschoben werden, oder an einem äußeren Fußfalz an der Innenseite anliegen. Die Lasche kann sich an einer vorderen Seitenwand der Aufnahme und an einem oberen Rand einer unteren Fassadenplatte abstützen, um so das Photovoltaik-Modul 16 zu halten. Die untere Aufnahme kann beispielsweise durch den unteren äußeren Rand der oberen Platte gebildet werden, so dass der Halter an dem Rand von innen her anliegt und sich gleichzeitig auf dem oberen Rand der unteren Platte abstützt.

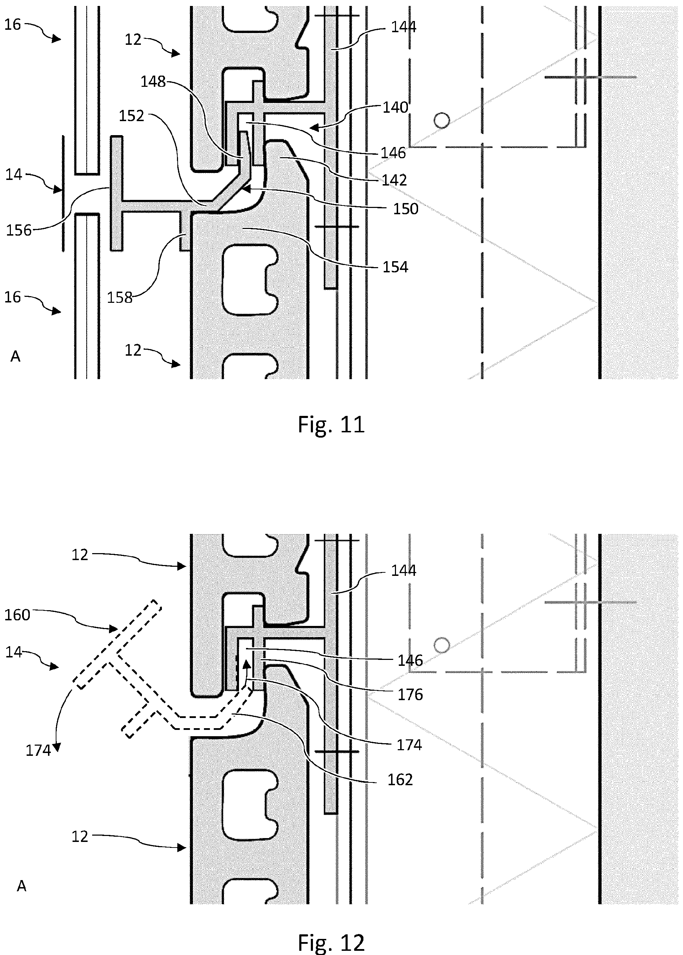

Fig. 11 zeigt das Beispiel aus Fig. 10 in einem vergrößerten Ausschnitt. Die Lasche 148 ist an dem freien Ende im Querschnitt konisch zulaufend ausgebildet, um ein Einführen in die Nut 146 zu erleichtern. In einer Variante ist die Nut mit einer konischen, d.h. aufgeweiteten Öffnung ausgebildet, um ein Einführen der Lasche in die Nut 146 zu erleichtern. In einer Variante sind Nut und Lasche abgeschrägt ausgebildet, zum Beispiel konisch, um ein Einführen der Lasche in die Nut 146 zu erleichtern. Die Nut kann auch als Fuge oder Laschenaufnahme bezeichnet werden.

In einer Option ist die weitere Lasche 158 länger nach unten abstehend ausgebildet, um die Anlagefläche an der Keramikplatte zu vergrößern. In einer weiteren Option ist an dem Anlagebereich der weiteren Lasche 158 eine kleine Aufdickung, bzw. Nase, vorgesehen als definierte Anlagefläche.

Die weitere Lasche 158 dient dem Einleiten von Druckkraft in die Keramikplatte 12, z.B. in horizontaler Richtung. Der Stützbereich 152 dient dem Einleiten von Druckkraft in die Keramikplatte 12, z.B. in vertikaler Richtung.

Fig. 12 zeigt das Beispiel aus Fig. 10, bzw. Fig. 11, während des Einsetzens einer Halterung für die Befestigung der Photovoltaik-Module. In Fig. 12 ist mit zwei Pfeilen 174 angedeutet, dass sich die Halterung 160 durch Verschwenken um eine zu den Fugen parallele Achse einsetzen lässt.

Bei dem beschriebenen drehenden Einsetzen von vorne wird die Lasche mit ihrem Kopfende in die Nut eingeschwenkt, bzw. eingeschoben.

In einer Variante ist vorgesehen, dass die Halterung 150 seitlich in die Nut eingefädelt wird und dann in horizontaler Richtung an die endgültige Stelle verschoben wird.

In einer weiteren Variante ist vorgesehen, dass die Nut eine Aufweitung in Richtung der Nut-Öffnung aufweist. Die Halterung 150 kann seitlich in die aufgeweitete Nut eingeführt werden, um dann in horizontaler Richtung an die endgültige Stelle verschoben zu werden. Bei dem Einführen in die Nut ist die Halterung um eine horizontale Achse parallel zur Fuge leicht angehoben, bzw. verschwenkt. Bei Erreichen der endgültigen Stelle wird die Halterung durch leichtes nach Verschwenken nach unten in die Nut weiter eingedrückt und so in der Nut sicher gehalten.

Die Halterung 160 wird eingesetzt und die weitere Lasche bildet zum Beispiel einen Anschlag an der Keramikplatte, so dass für die Halterung ein definierter Anschlag vorgesehen ist, d.h. es wird eine definierte Einbauposition zur Verfügung gestellt.

In einer Variante weist der Halter 144 keine Nut auf, und die Lasche 148 wird hinter einen vertikalen Steg 174 der Halterung 144 eingesetzt, um an diesem Steg von hinten anliegend Kraft in die Halterung 144 einzuleiten. Die Abstützung an der Keramikplatte 12 erfolgt dann wie bei der Variante mit der Nut. Die Lasche wird zum Beispiel zwischen der Keramikplatte 12 und dem Steg 176 eingefügt.

In einer Variante wird die Lasche 148 so eingeführt, dass sie direkt an einem Fußfalz der oberen Keramikplatte 12 anliegt, zum Beispiel wenn keine Nut vorhanden ist. Der Fußfalz kann dann verstärkt ausgeführt werden. Ein anderes Beispiel sieht vor, dass die Lasche möglichst weit nach oben ragt, um möglichst am Fuß, d.h. Beginn des Falzes anzuliegen.

Die Halterung 150, 160 stellt eine Befestigung dar, die durch Belastung gesichert wird. Zur Fixierung ist beispielsweise kein Einschnappen oder ähnliches erforderlich. Auch etwaige Sicherungsstifte sind nicht erforderlich. Die Halterung 150, 160 ist selbstsichernd ausgebildet. Bei Belastung kann sie in ihrer Position nicht mehr geändert werden.

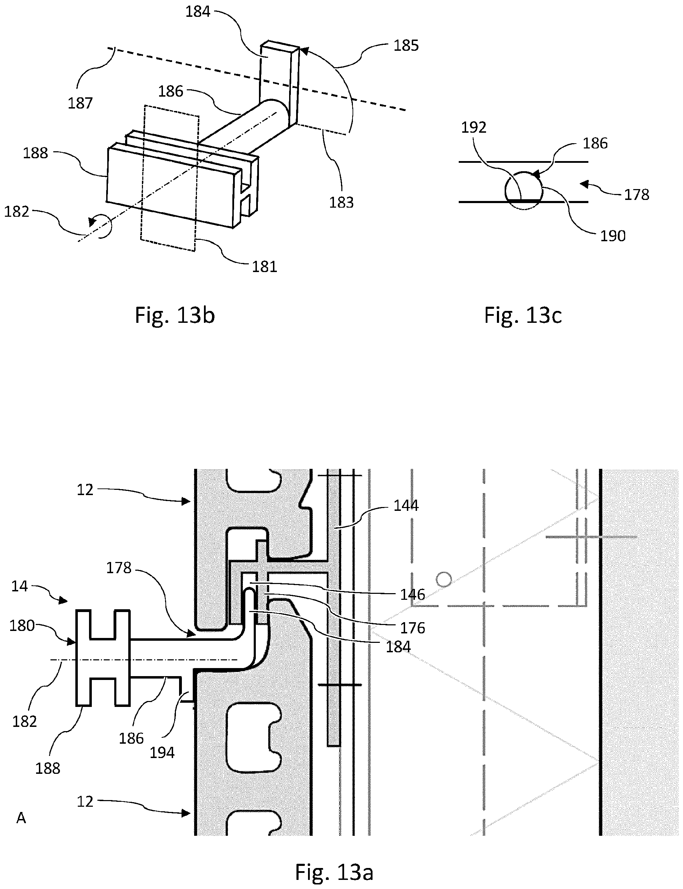

In Fig. 13a ist ein Beispiel gezeigt, bei dem zwischen zwei benachbarten Fassadenplatten eine Fuge 178 ausgebildet ist und eine Halterung 180 kann in einer um ca. 90° um eine senkrecht zur Platte verlaufende Achse 182 verdrehten Einführposition in die Fuge eingesetzt werden, und durch eine gegenläufige Rotation um ca. 90° in eine Halteposition bewegt werden, in der die Halterung gehalten ist. Dieses zu der oben beschriebenen Variante alternative Verdrehen um 90° zum Einsetzen ist als Option vorgesehen. An der Halterung 180 können dann die Photovoltaik-Module montiert werden (in Fig. 13a nicht gezeigt).

Fig. 13a zeigt einen Vertikalschnitt durch die Fassade mit der Halterung 180 in der eingebauten Position. Fig. 13b zeigt eine isometrische Skizze der Halterung 180. Die Position beim Einsetzen ist hier mit einem gestrichelten Rechteck 181 und einer gestrichelten Linie 183 angedeutet. Ein Pfeil 185 deutet das Drehen um die Achse 182 an. Eine weitere gestrichelte Linie 187 deutet die ungefähre Anordnung der keramischen Fassadenplatten an.

Die Halterung 180 ist dazu mit einer Lasche 184 ausgebildet, die in die Nut 146 der Halterung 144 eingreifen kann. Die Lasche ist beispielsweise mit einem in Einbauposition horizontal verlaufenden Steg 186 verbunden, der aus der Fuge 178 herausragt und am anderen Ende mit einem Haltebereich 188 für die Photovoltaik-Module verbunden ist. Der Steg 186 weist in einem Beispiel einen zylindrischen Querschnitt 190 auf, wie in Fig. 13c in einem Schnitt durch den Steg 186 gezeigt ist, um so möglichst viel statische Höhe zur Verfügung zu stellen, und gleichzeitig das Drehen um 90° in der Fuge zu ermöglichen. Der Steg 186 ist auf der unteren Seite, die auf der unteren Keramikplatte aufliegt, mit einer Abflachung 192 ausgebildet, um die Auflagekraft möglichst flächig einzuleiten. Zusätzlich kann noch eine weitere Lasche 194 an der Halterung 180 vorgesehen sein, um sich an der keramischen Fassadenplatte 12 am oberen Rand auf der Außenseite der keramischen Fassadenplatte 12 abzustützen.

Die Halterung wird also zunächst in einer räumlichen Anordnung in die Fuge eingesetzt, in der die Halterung zur endgültigen Position um ca. 90° verdreht ist. In dieser Stellung ragt die Lasche noch nicht in die Nut hinein, nur in die Fuge. Erst durch das dann erfolgende Verdrehen in die richtige räumliche Anordnung der Halterung wird die Lasche in die Nut eingedreht. Die Lasche wird also seitlich von unten in die Nut eingeschwenkt.

Es sei darauf hingewiesen, dass die beiden unterschiedlichen Varianten, bei denen die Lasche der Halterung durch Drehen um eine Achse in die Nut eingeführt wird, auch kombiniert vorgesehen sein können. Beispielsweise ist die Halterung mit einer Lasche ausgebildet, die in die Fuge eingesetzt wird. Als Alternative kann die Lasche gebogen mit einer Rundung ausgebildet sein, um durch Eindrehen um eine in Fugenrichtung verlaufende Achse in die Aufnahme eingesetzt bzw. eingeschwenkt zu werden.

Beispielsweise sind eine zerstörungsfreie Demontage und auch Re-Montage, d.h. erneute Montage, möglich. Diese bietet zum Beispiel Vorteile bei der Erneuerung der Photovoltaik-Technik, insbesondere der photovoltaisch wirksamen Flächen, d.h. der Photovoltaik-Module, oder auch bei Reparatur, Umbau etc., z.B. Ersatz der Photovoltaik bei technologischer Entwicklung. Die Montage und Demontage können zum Beispiel ohne Schrauben, Nieten etc. erfolgen. Die Halterung ist aus fixer Position heraus lösbar.

In einem nicht im Detail gezeigten, und in Fig. 3 angedeuteten Beispiel weist die Fassadenplatte 12 einen zentralen Bereich auf, der von den Ausnehmungen begrenzt wird. Die Fassadenplatte 12 weist außerdem einen Randbereich auf, der den zentralen Bereich wenigstens teilweise umgibt. Der Randbereich ist wenigstens teilweise abtrennbar, so dass die Fassadenplatte an verschiedene Maße anpassbar ist. Als Option ist vorgesehen, dass der zentrale Bereich auf Modulmaße der Photovoltaik-Module abgestimmt ist. In einer anderen Variante ist der zentrale Bereich durch Vertiefungen oder Hervorhebungen der Fassadenplatte begrenzt, wobei die Vertiefungen oder Hervorhebungen der Befestigung der Photovoltaik-Module dienen. Diese Option ist auch für die anderen in den Figuren gezeigten, und im Text beschriebenen Varianten vorgesehen.

Der zentrale Bereich bildet sozusagen einen fixen Bereich und der Randbereich bildet einen variablen Bereich. Der fixe Bereich dient der Aufnahme der Photovoltaik, der variable Bereich dient der konstruktiven Adaption an unterschiedliche Maße. Die Photovoltaik kann damit in Standardgrößen bzw. Standardabmessungen verwendet werden, wohingegen der adaptive Randbereich eine Integration in unterschiedliche Fassadenraster ermöglicht. Das Abtrennen der Randbereiche ist insbesondere bei einem keramischen Werkstoff wie Ziegel leicht möglich. Die Fassadenplatte aus keramischem Werkstoff übernimmt die Funktion der Anpassbarkeit gegenüber der Unterkonstruktion. Die konstruktiven Anschlüsse der Photovoltaik können fix bleiben, wenn die Randbereiche außerhalb der Photovoltaik-Felder liegen.

In einem Beispiel ist vorgesehen, dass wenigstens eines der Photovoltaik-Modul 16 vorgesehen ist, das mit der wenigstens einen Befestigungsvorrichtung 14 an der Fassadenplatte befestigt ist, wobei das wenigstens eine Photovoltaik-Modul 16 an der Fassadenplatte 12 hinterlüftet oder anliegend gehalten ist. Das hinterlüftete oder anliegende Halten ist als Option vorgesehen.

Fig. 14 zeigt als Option ein Fassadenhalteprofil 400 zur Befestigung von Photovoltaik-Modulen in einem Fassadensystem mit keramischen Fassadenplatten. Das Fassadenhalteprofil 400 weist einen ersten Haltebereich 402 und einen zweiten Haltebereich 404 auf. Der erste Haltebereich 402 ist mit einer Aufnahme 406 für Randbereiche von Photovoltaik-Modulen ausgebildet. Der zweite Haltebereich 404 ist dem ersten Haltebereich 402 gegenüber angeordnet. Der zweite Haltebereich 404 ist mit einem Vorsprung 408 zum Eingreifen in eine Unterkonstruktion zur Befestigung von keramischen Fassadenplatten ausgebildet.

Als Option ist gezeigt, dass der zweite Haltebereich 404 einen hinteren Kopffalz 410 zur Ausbildung eines oberen Fassadenhalteprofils aufweist.

Als weitere Option ist gezeigt, dass der zweite Haltebereich 404 einen vorderen Fußfalz 412 und einen hinteren Fußfalz 414 zur Ausbildung eines unteren Fassadenhalteprofils aufweist, wobei der hintere Fußfalz kleiner als der vordere Fußfalz ausgebildet ist und von dem vorderen Fußfalz durch eine Nut 416 getrennt ist.

In der unteren Aufnahme für die Randbereiche von Photovoltaik-Modulen kann eine Vertiefung 418 ausgebildet sein.

Als Option ist außerdem noch eine Fixierungsvorrichtung 420 für die Keramikplatten gezeigt, die auch für das untere Fassadenhalteprofil zur Verfügung steht.

In Fig. 14 ist angedeutet, dass das Fassadenhalteprofil 400 eine ähnliche Kontur aufweist, wie die Keramikplatte an den oberen und unteren Rändern. Das Fassadenhalteprofil 400 sitzt im unteren Bereich des Photovoltaik-Moduls auf der Haltevorrichtung in der gleichen Art auf, wie die Keramikplatten. Das Fassadenhalteprofil 400 greift am oberen Bereich des Photovoltaik-Moduls von unten in die Haltevorrichtung in der gleichen Art ein, wie die Keramikplatten.

Fig. 14 zeigt einen Vertikalschnitt eines weiteren Beispiels des Fassadensystems 200. Das Beispiel weist eine vorgehängte Fassadenkonstruktion 218 auf, die Teil eines Wandaufbaus einer Gebäudehülle ist. Als Fassadenelemente weist das Fassadensystem Photovoltaik-Module 220 und keramischen Fassadenplatten 222 auf. Der Wandaufbau bildet eine Hinterlüftung der Fassadenelemente, d.h. der Photovoltaik-Module 220 und der keramischen Fassadenplatten 222. Der Wandaufbau zeigt außerdem noch eine Wärmedämmung 224, beispielsweise auf der Außenseite einer Wandfläche des Gebäudes. Die Hinterlüftung ist zwischen den Fassadenelementen und der Wärmedämmung angeordnet. Das Fassadensystem 200 bildet mit den Photovoltaik-Modulen 220 eine Fassade zur solaren Energienutzung.

Wenigstens ein Teil der Photovoltaik-Module ist als Photovoltaik-Platten 226 ausgebildet, die direkt an einer Unterkonstruktion 228 befestigt werden können. Die Photovoltaik-Module 220 und die keramischen Fassadenplatten 222 sind, bezogen auf die Fassadenfläche, nebeneinander angeordnet, zum Beispiel in vertikaler und/oder horizontaler Richtung nebeneinander.

Als Option ist gezeigt, dass die Photovoltaik-Platten 220 und die keramischen Fassadenplatten 222 an der gleichen Unterkonstruktion 228 befestigt werden können.

Als weitere Option ist gezeigt, dass die Photovoltaik-Platten 220 und die keramischen Fassadenplatten 222 mit gleichen Befestigungsmitteln und Haltern 230 an der Unterkonstruktion 228 befestigt werden können.

Als Option ist außerdem auch gezeigt, dass die Photovoltaik-Platten 220 und die keramischen Fassadenplatten 222 austauschbar an der Unterkonstruktion gehalten sind.

In einer weiteren, nicht gezeigten Option ist vorgesehen, dass erste Bereiche und zweite Bereiche vorgesehen sind. Die ersten Bereiche sind flächige Fassadenfelder. Die zweiten Bereiche weisen Fassadensonderfelder auf mit wenigstens einem aus der Gruppe von horizontale Fassadenkante, vertikale Fassadenkante, vorspringende Fassadenecke, zurückspringende Fassadenecke, seitlicher Fassadenanschluss, unterer Fassadenanschluss, oberer Fassadenanschluss, seitlicher Fassadenrand, unterer Fassadenrand und oberer Fassadenrand. Wenigstens in einem Teil der ersten Bereiche sind die Photovoltaik-Module vorgesehen. In den zweiten Bereichen sind wenigstens teilweise keramische Fassadenelemente vorgesehen. Die keramischen Fassadenelemente umfassen beispielsweise die keramischen Fassadenplatten.

In einem weiteren Beispiel, das in Fig. 14 als Option gezeigt ist, weist eine Fassadenverkleidung 10 wenigstens eine keramische Fassadenplatte 12 und wenigstens eine Befestigungsvorrichtung 14 für wenigstens ein Photovoltaik-Modul 16 auf, das mit der wenigstens einen Befestigungsvorrichtung befestigt wird. Die wenigstens eine Befestigungsvorrichtung weist dabei das Fassadenhalteprofil 400 nach einem der vorhergehenden Beispiele auf, und das wenigstens eine Photovoltaik-Modul 16 ist mit dem Fassadenhalteprofil 400 gehalten.

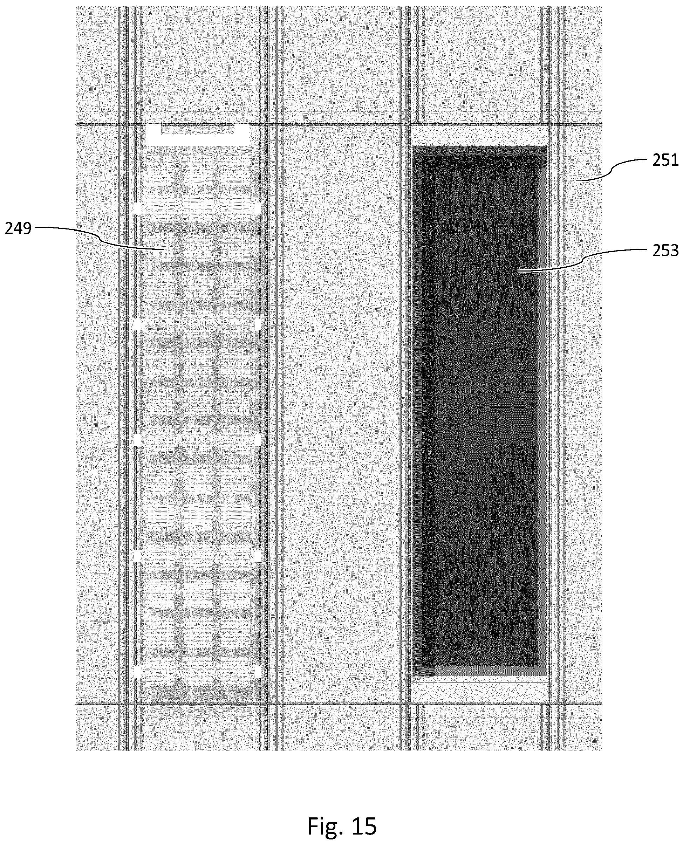

Fig. 15 zeigt ein weiteres Beispiel eines Fassadensystems in einer Ansicht. Die Ansicht zeigt vertikal ausgerichtete keramische Fassadenplatten 251. Im rechten Bereich ist ein Fenster 253 angedeutet. Im linken Bereich ist vor den keramischen Fassadenplatten ein Photovoltaik-Modul 249 vorgesehen. Alternativ zu dem Fenster 253 kann an auch ein Photovoltaik-Modul in der Ebene der keramischen Fassadenplatten 251 vorgesehen sein.

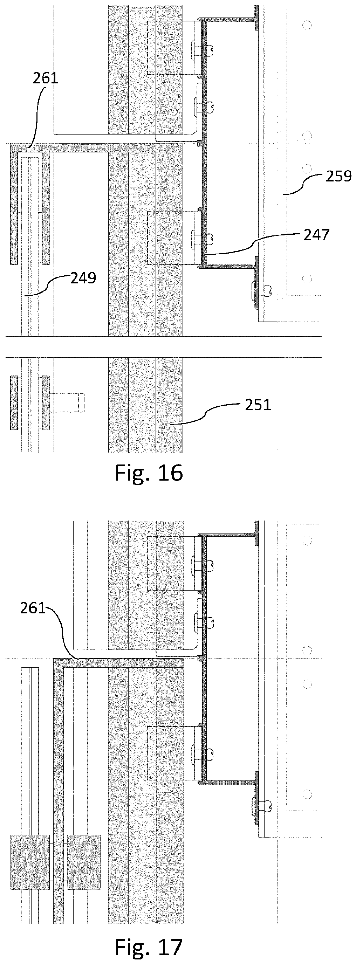

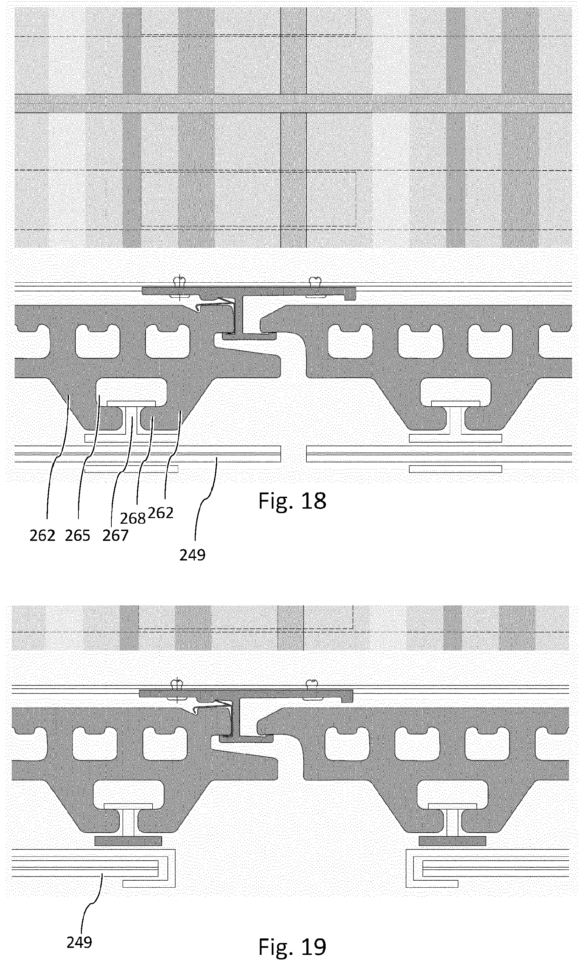

Fig. 16 zeigt einen ersten Vertikalschnitt durch das Fassadensystem aus Fig. 15. Die keramischen Fassadenplatten 251 sind mit Halterungen 247 an einer Unterkonstruktion 259 befestigt. Die Photovoltaik-Module 249 sind mit einer oberen Randhalterung 261 am oberen Rand der Fassadenplatten aufliegend gehalten. Zusätzlich können noch seitliche Halterungen vorgesehen sein, die in Vertiefungen der keramischen Fassadenplatten eingreifen (siehe Fig. 18 und Fig. 19). Beispielsweise umgreift die Randhalterung 261 das Photovoltaik-Modul an dessen oberen Rand.

Fig. 17 zeigt einen zweiten Vertikalschnitt durch das Fassadensystem aus Fig. 15. Die Randhalterung 261 greift seitlich an den Photovoltaik-Modulen an.

Fig. 18 zeigt einen ersten Horizontalschnitt durch das Fassadensystem aus Fig. 15 und eine darüber angeordnete Ansicht (Ausschnitt). Die keramischen Fassadenplatten 251 sind mit Aufdickungen 262 als linear verlaufende Vorsprünge ausgebildet. In den Vorsprüngen sind Ausnehmungen 265 angeordnet. Die Photovoltaik-Module sind mit Halterungen 267 gehalten, die in die Ausnehmungen 265 eingreifen und dort seitliche Randbereiche 268 hintergreifen. In Fig. 18 ist ein Beispiel gezeigt, bei dem die Photovoltaik-Module punktuell gehalten sind.

Fig. 19 zeigt einen zweiten Horizontalschnitt durch das Fassadensystem aus Fig. 15 und eine darüber angeordnete Ansicht (streifenförmiger Ausschnitt). In Fig. 19 ist ein Beispiel gezeigt, bei dem die Photovoltaik-Module seitlich mit Randprofilen gehalten sind.

Die linearen Vorsprünge verlaufen in montiertem Zustand der Fassadenplatten zum Beispiel in vertikaler Richtung. In einem nicht gezeigten Beispiel verlaufen die linearen Vorsprünge in horizontaler Richtung.

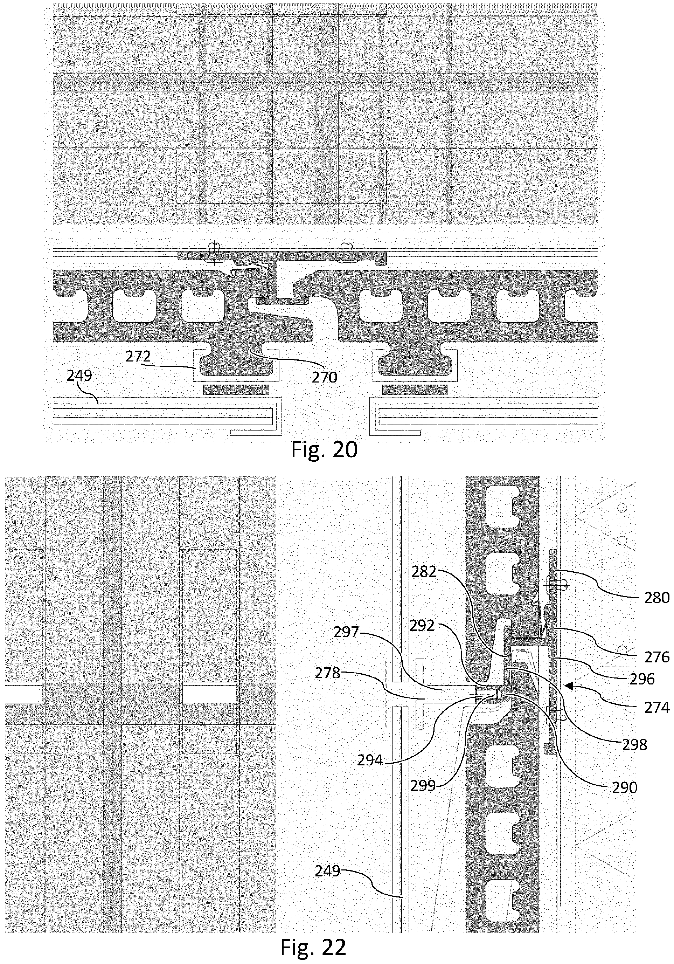

Fig. 20 zeigt einen dritten Horizontalschnitt durch das Fassadensystem aus Fig. 15 und eine darüber angeordnete Ansicht (Ausschnitt). Auf der Vorderseite der keramischen Fassadenplatten 251 sind Profilierungen als lineare Vorsprünge 270 ausgebildet. Die linearen Vorsprünge weisen seitlich abstehende Bereiche auf, die, bezogen auf eine Senkrechte zur Erstreckung der Fassadenplatte, eine Hinterschneidung zum Hintergreifen mit der wenigstens einen Befestigungsvorrichtung bilden. Zum Beispiel verlaufen die linearen Vorsprünge in montiertem Zustand der Fassadenplatten in vertikaler Richtung. Alternativ können die linearen Vorsprünge horizontaler Richtung verlaufen. Die Photovoltaik-Module sind mit klammerartigen Halterungen 272 an den linearen Vorsprüngen 270 gehalten.

Fig. 21 zeigt ein Beispiel einer mit Photovoltaik-Modulen nachrüstbaren Fassade in einer schematischen Ansicht. Im oberen Teil der Darstellung ist die Fassade ohne Photovoltaik-Module dargestellt, sozusagen in einem Anfangszustand. Im unteren Teil der Darstellung ist die Fassade mit den Photovoltaik-Modulen 16 dargestellt, sozusagen in einem nachgerüsteten Zustand. Unten links ist die Fassade mit den Photovoltaik-Modulen 16 vor den keramischen Fassadenplatten 12 ausgebildet; unten rechts sind keine Photovoltaik-Module vorgesehen. Hier könnte die Fassade in einem weiteren Beispiel aber ebenfalls mit Photovoltaik-Modulen nachgerüstet werden, beispielsweise zu einem späteren Zeitpunkt.

Wie im Folgenden anhand verschiedener Beispiele erläutert, ist ein mit Photovoltaik-Modulen nachrüstbares Fassadensystem vorgesehen, das eine vorgehängte Fassadenkonstruktion aufweist mit einer Unterkonstruktion zur Befestigung an einer tragenden Struktur eines Gebäudes und einer Verkleidung, die an der Unterkonstruktion befestigbar ist. Die Verkleidung weist zum Beispiel keramische Fassadenplatten auf. Außerdem ist eine Befestigungsanordnung vorgesehen, mit der Photovoltaik-Module in montiertem Zustand des Fassadensystems nachträglich befestigbar sind, d.h. nachträglich befestigt werden können.

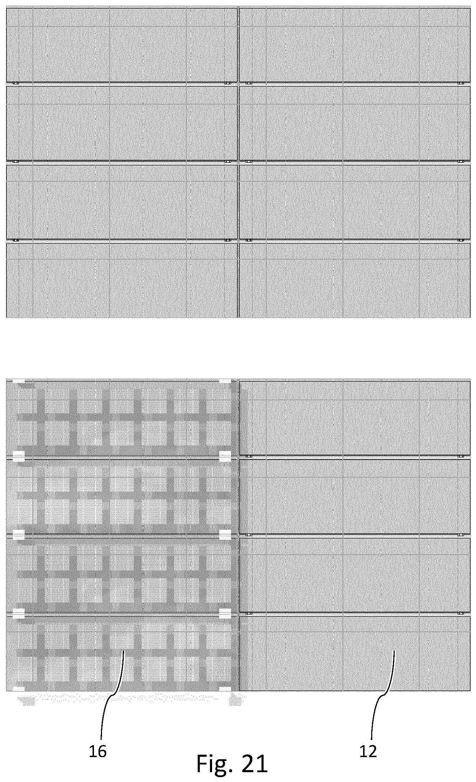

Fig. 22 zeigt ein Beispiel einer mit Photovoltaik-Modulen nachrüstbaren Fassade in einer Ansicht und in einem Schnitt.

In Fig. 22 ist beispielsweise gezeigt, dass die Befestigungsanordnung wenigstens eine zweiteilige Befestigungen 274 aufweist, wobei ein erster Befestigungsteil 276 bei der Montage des Fassadensystems montierbar ist, und wobei ein zweiter Befestigungsteil 278 nachträglich an dem ersten Befestigungsteil befestigbar ist, um ein Photovoltaik-Modul zu befestigen. Das erste Befestigungsteil ist als eine bi-funktionale Halterung der keramischen Fassadenplatten ausgebildet. Ein erster Haltebereich 280 ist vorgesehen zur Befestigung an der Unterkonstruktion; ein zweiter Haltebereich 282 ist zum Halten der keramischen Fassadenplatten ausgebildet und ein dritter Haltebereich 290 dient der Befestigung der Photovoltaik-Module. Das zweite Befestigungsteil 278 ist mit dem dritten Haltebereich 290 verbindbar und ist als Halterung für Photovoltaik-Module ausgebildet.

Der dritte Haltebereich ist beispielsweise als ein Haltevorsprung 292 ausgebildet, der in einem Fugenbereich zwischen zwei angrenzenden keramischen Fassadenplatten anordenbar ist und einen Kopplungsbereich 294 für eine Verbindung mit dem zweiten Befestigungsteil aufweist. Das zweite Befestigungsteil ist mit dem Kopplungsbereich verbindbar.

Als Beispiel ist in Fig. 22 gezeigt, dass an einer Halterung 296 an einer Lasche 298 der Kopplungsbereich ausgebildet ist, der zwischen den keramischen Platten in Richtung nach außen ragt. Der Kopplungsbereich ist mit einem Innengewinde 299 ausgebildet, um eine Halterung 297 für die Photovoltaik-Module befestigen zu können.

Die Lasche 298 stützt sich in einem Beispiel an der keramischen Platten ab, beispielsweise an der Stelle, an der der Kopplungsbereich 294 absteht.

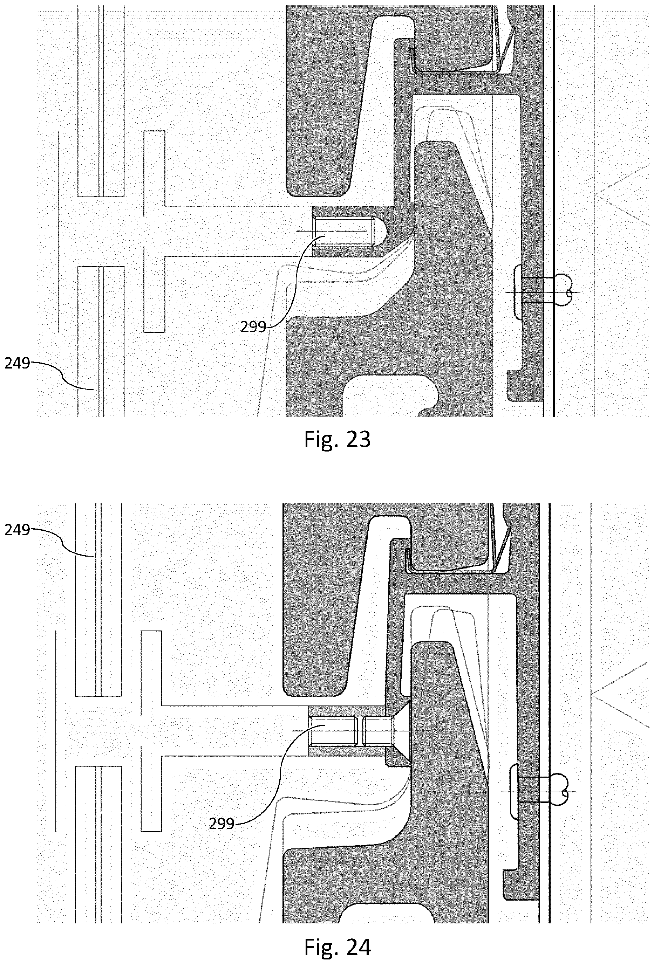

Fig. 23 zeigt ein Detail aus Fig. 22. Das Innengewinde 299 des Kopplungsbereichs 294 ist in Form einer Buchse ausgebildet. Beispielsweise ist die Buchse an der Lasche 298 des dritten Haltebereichs 290 einstückig ausgebildet. Das Vorsehen der angeformten bzw. einstückigen Buchse bietet sich zum Beispiel bei der Herstellung als Gussbauteil an und bietet den Vorteil von reduzierten Montageschritten.

Fig. 24 zeigt ein Detail einer Variante zu Fig. 23. Das Innengewinde 299 des Kopplungsbereichs 294 ist in Form einer angesetzten Hülse, bzw. einer angesetzten Buchse ausgebildet. Beispielsweise ist die Buchse mit einer Verschraubung an der Lasche 298 des dritten Haltebereichs 290 befestigt. Zum Beispiel ist die Hülse mit einer Schraube an der Lasche 298 des dritten Haltebereichs 290 befestigt. Die Schraube ist zum Beispiel eine Senkkopfschraube, die als Schlitz-, Kreuz-, Innensechskant oder Torx-Schraube ausgebildet sein kann. In einem anderen Beispiel ist die Hülse an der Lasche 298 des dritten Haltebereichs 290 durch Schweiß- oder Pressverbindung befestigt. In Bereichen, die nachrüstbar sein sollen, wird die Hülse in der Regel bereits bei der Montage der Photovoltaik-Module vorgesehen. Das Vorsehen der angesetzten Hülse bietet zum Beispiel den Vorteil, dass der erste Befestigungsteil als Strangpressprofil hergestellt werden kann. In Fassadenbereichen, in denen keine Photovoltaik-Module vorgesehen werden und auch nicht nachgerüstet werden sollen, kann die Halterung bis auf die fehlende Hülse baugleich mit dem ersten Befestigungsteil verwendet werden. Die Bohrung in der Lasche 298 für die Schraubverbindung kann vorgesehen sein oder auch nicht.

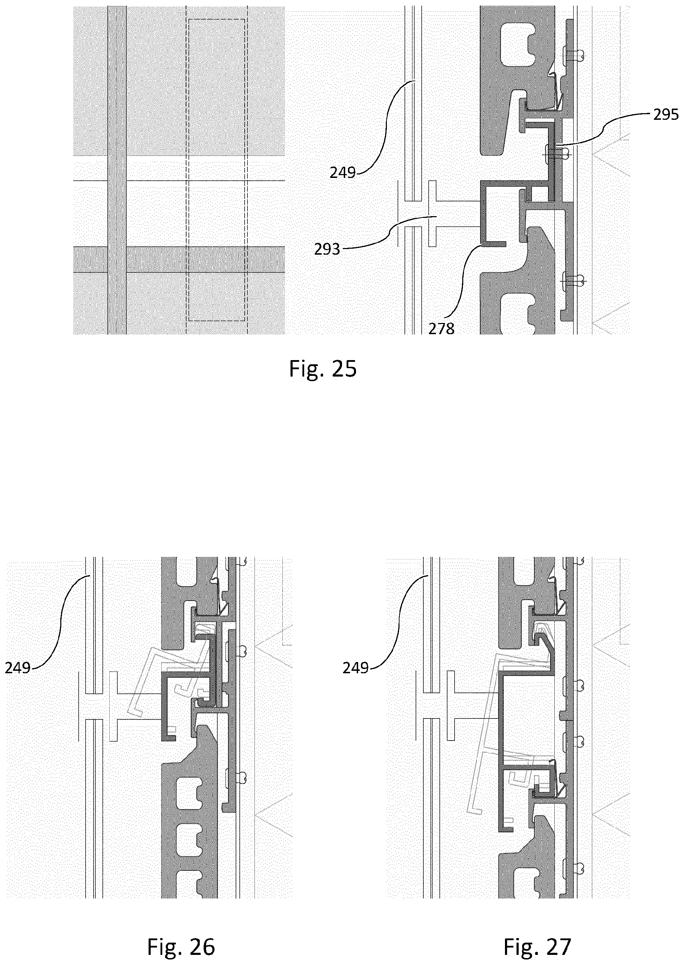

Fig. 25 zeigt ein weiteres Beispiel einer mit Photovoltaik-Modulen nachrüstbaren Fassade in einem Schnitt. Der dritte Haltebereich ist als eine Profilierung 295 ausgebildet, in der das zweite Befestigungsteil eingehängt werden kann. An dem zweiten Befestigungsteil ist eine Halterung 293 für die Photovoltaik-Module vorgesehen. Das Einsetzen ist in Fig. 26 und Fig. 27 mit dünner Linie angedeutet.

Fig. 26 zeigt eine erste Variante zu Fig. 25 mit einem weiteren Beispiel der Halterung 293.

Fig. 27 zeigt eine zweite Variante zu Fig. 25 mit einem weiteren Beispiel der Halterung 293.

Die Nachrüstbarkeit ist zum Beispiel auch für die Varianten in Fig. 2, Fig. 7, Fig. 8, Fig. 9, Fig. 10, Fig. 11, Fig. 12 und Fig. 13 vorgesehen.

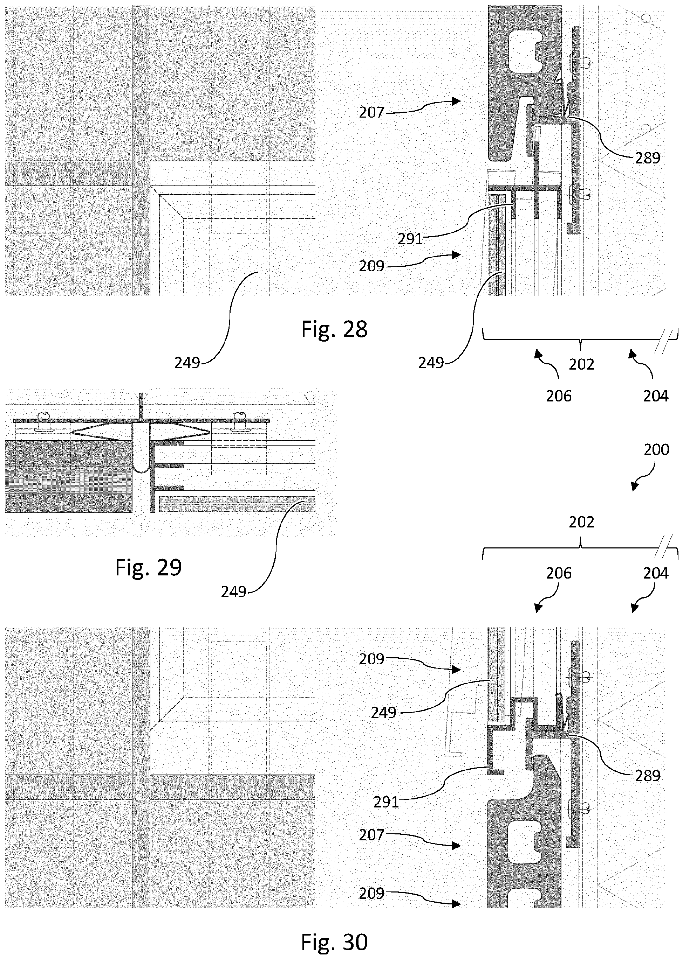

Fig. 28 zeigt ein weiteres Beispiel einer mit Photovoltaik-Modulen nachrüstbaren Fassade in einer Ansicht und einem Schnitt. Die Photovoltaik-Module sind hier als Platten in der Ebene der keramischen Fassadenplatten eingesetzt. Dazu ist eine Halterung 291 ausgebildet, um die Photovoltaik-Platten zu halten. Fig. 28 zeigt die oberen Anschlusspunkte und Fig. 29 zeigt in einem Horizontalschnitt den seitlichen Anschluss- bzw. Übergangspunkt. Fig. 30 zeigt die unteren Anschlusspunkte zu Fig. 28 und Fig. 29.

In Fig. 28 und Fig. 30 ist als weiteres Beispiel ein Fassadensystem 200 vorgesehen, das eine vorgehängte Fassadenkonstruktion 202 mit einer Unterkonstruktion 204 zur Befestigung an einer tragenden Struktur eines Gebäudes und einer Verkleidung 206 aufweist, die an der Unterkonstruktion befestigbar ist. Die Verkleidung weist keramische Fassadenplatten 207 und Photovoltaik-Module 209 auf, die an der Unterkonstruktion befestigbar sind. Die Unterkonstruktion weist Halterungen 289 auf und die keramischen Fassadenplatten 207 und die Photovoltaik-Module 209 sind über die gleichen Halterungen 289 gehalten.

Als Option ist vorgesehen, dass wenigstens ein Teil der Photovoltaik-Module 209 mit dem Fassadenhalteprofil 400 nach einem der oben genannten Beispiele (siehe auch

Fig. 14) an der Unterkonstruktion, z.B. an den gleichen Halterungen 289 wie die keramischen Fassadenplatten 207 gehalten ist.

Die oberhalb beschriebenen Ausführungsbeispiele können in unterschiedlicher Art und Weise kombiniert werden. Insbesondere können auch Aspekte der Vorrichtungen für die Ausführungsformen des Verfahrens verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Eine Fassadenverkleidung (10) aufweisend:
- wenigstens eine keramische Fassadenplatte (12); und
- wenigstens eine Befestigungsvorrichtung (14) für wenigstens ein Photovoltaik-Modul (16);
wobei mit der wenigstens einen Befestigungsvorrichtung das Photovoltaik-Modul an der Fassadenplatte befestigbar ist; und
wobei die wenigstens eine Befestigungsvorrichtung ausgebildet ist, wenigstens einen Teil der Lasten des Photovoltaik-Moduls in die Fassadenplatte einzuleiten und die Fassadenplatte ausgebildet ist, den wenigstens einen Teil der Lasten des Photovoltaik-Moduls in eine Unterkonstruktion einzuleiten; und
wobei, vorzugsweise, die Fassadenplatte aus einem Ziegelwerkstoff besteht;
wobei die Fassadenplatte stranggepresst ist; und wobei die Fassadenplatte als großformatige Ziegelplatte ausgebildet ist.

2. Fassadenverkleidung nach Anspruch 1, wobei die Befestigungsvorrichtung eine Halterung (44) aufweist, die an einem Rand (46) der Fassadenplatte befestigbar ist; und
wobei die Befestigungsvorrichtung eine obere Randhalterung (261) aufweist, die in montiertem Zustand der Fassadenplatten am oberen Rand der Fassadenplatten aufliegend befestigbar ist.

3. Fassadenverkleidung nach einem der vorhergehenden Ansprüche, wobei die Halterung an einem Stoßbereich von zwei benachbarten Fassadenplatten mit einer Lasche (148; 162; 184) in eine untere Aufnahme einer oberen Fassadenplatte oder eine Aufnahme einer Fassadenhalterung der Fassadenplatten im Stoßbereich von unten einschiebbar ist; und
wobei die Lasche an einer vorderen Seitenwand der Aufnahme und an dem oberen Rand der unteren Fassadenplatte abstützbar ist, um so das Photovoltaik-Modul zu halten.

4. Fassadenverkleidung nach einem der vorhergehenden Ansprüche, wobei zwischen zwei benachbarten Fassadenplatten eine Fuge ausgebildet ist und die Halterung in einer um ca. 90° um eine senkrecht zur Platte verlaufende Achse verdrehten Einführposition in die Fuge einsetzbar ist, und durch eine gegenläufige Rotation um ca. 90° in eine Halteposition bewegbar ist, in der die Halterung gehalten ist.

5. Fassadenverkleidung nach einem der vorhergehenden Ansprüche, wobei die Fassadenplatte an der Außenseite Profilierungen (31) aufweist, die als Hervorhebungen ausgebildet sind, an denen das wenigstens eine Photovoltaik-Modul abstützbar ist;
wobei die Profilierungen als lineare Vorsprünge ausgebildet sind;
wobei die linearen Vorsprünge seitlich abstehende Bereiche aufweisen, die, bezogen auf eine Senkrechte zur Erstreckung der Fassadenplatte, eine Hinterschneidung zum Hintergreifen mit der wenigstens einen Befestigungsvorrichtung bilden; und
wobei die linearen Vorsprünge in montiertem Zustand der Fassadenplatten in vertikaler Richtung verlaufen.

6. Fassadenverkleidung nach einem der vorhergehenden Ansprüche, wobei die Fassadenplatte Ausnehmungen für das Zusammenwirken mit der wenigstens einen Befestigungsvorrichtung aufweist;
wobei die Ausnehmungen als linear ausgebildete Vertiefungen auf der Außenseite der Fassadenplatte vorgesehen sind; und
wobei die Ausnehmungen vorgesehen sind:
i) zur Aufnahme von Halterungen für die Befestigung des wenigstens einen Photovoltaik-Moduls; und/oder
ii) zum Eingriff von Halterungen für die Befestigung des wenigstens einen Photovoltaik-Moduls; und
wobei, vorzugsweise:
- die Ausnehmungen Bereiche aufweisen, die, bezogen auf eine Senkrechte zur Erstreckung der Fassadenplatte, eine Hinterschneidung zum Hintergreifen der wenigstens eine Befestigungsvorrichtung bilden; wobei die Ausnehmungen als lineare Ausnehmungen (265) ausgebildet sind, die in montiertem Zustand der Fassadenplatten vertikal verlaufen; und/oder
- die Fassadenplatte Aufdickungen aufweist und die Ausnehmungen in den Aufdickungen vorgesehen sind; wobei die Aufdickungen als linear verlaufende Vorsprünge ausgebildet sind und die Ausnehmungen in den Vorsprüngen angeordnet sind.

7. Fassadenverkleidung nach einem der vorhergehenden Ansprüche, wobei die Fassadenplatte eine vordere Plattenschale (24) und eine hintere Plattenschale (26) aufweist, die durch Stege (28) miteinander verbunden sind;
wobei Längslöcher (30) vorgesehen sind, die parallel zu den Stegen zwischen den Stegen angeordnet sind; und
wobei die Halterungen in wenigstens eines der Längslöcher eingreifen.

8. Fassadenverkleidung nach einem der vorhergehenden Ansprüche, wobei die Fassadenplatte einen zentralen Bereich aufweist, der von den Ausnehmungen begrenzt wird;
wobei die Fassadenplatte einen Randbereich aufweist, der den zentralen Bereich wenigstens teilweise umgibt;
wobei der Randbereich wenigstens teilweise abtrennbar ist, so dass die Fassadenplatte an verschiedene Maße anpassbar ist; und
wobei der zentrale Bereich auf Modulmaße der Photovoltaik-Module abgestimmt ist.

9. Fassadenverkleidung nach einem der vorhergehenden Ansprüche, wobei mehrere Photovoltaik-Module nebeneinander mit Zwischenabstand zueinander und mit Halteabstand zu der wenigsten einen Fassadenplatte befestigbar sind;
wobei wenigstens eine der Fassadenplatten eine helle Oberfläche aufweist; und
wobei die Photovoltaik-Module eine zweiseitig aktive Wirkschicht zur Stromerzeugung aufweisen, so dass in den Zwischenabstand eindringende solare Strahlung von der hellen Oberfläche an die Rückseite der Photovoltaik-Module reflektierbar ist und mit den Photovoltaik-Modulen beidseitig Strom erzeugbar ist.

10. Ein Fassadenhalteprofil (400) zur Befestigung von Photovoltaik-Modulen in einem Fassadensystem mit keramischen Fassadenplatten, wobei das Fassadenhalteprofil aufweist:
- einen ersten Haltebereich (402), der mit einer Aufnahme (406) für Randbereiche von Photovoltaik-Modulen ausgebildet ist, und
- einen zweiten Haltebereich (404), der dem ersten Haltebereich gegenüber angeordnet ist und der mit einem Vorsprung (408) zum Eingreifen in eine Unterkonstruktion zur Befestigung von keramischen Fassadenplatten ausgebildet ist;
wobei, vorzugsweise, der zweite Haltebereich aufweist:
i) einen hinteren Kopffalz (410) zur Ausbildung eines oberen Fassadenhalteprofils; oder
ii) einen vorderen Fußfalz (412) und einen hinteren Fußfalz (414) zur Ausbildung eines unteren Fassadenhalteprofils, wobei der hintere Fußfalz kleiner als der vordere Fußfalz ausgebildet ist und von dem vorderen Fußfalz durch eine Nut (416) getrennt ist.

11. Eine Fassadenverkleidung (10) aufweisend:
- wenigstens eine keramische Fassadenplatte (12); und
- wenigstens eine Befestigungsvorrichtung (14) für wenigstens ein Photovoltaik-Modul (16);
wobei mit der wenigstens einen Befestigungsvorrichtung das Photovoltaik-Modul befestigbar ist; und
wobei die wenigstens eine Befestigungsvorrichtung ein Fassadenhalteprofil nach dem Anspruch 10 aufweist und das wenigstens eine Photovoltaik-Modul mit dem Fassadenhalteprofil gehalten ist.

12. Ein Fassadensystem (200), aufweisend eine vorgehängte Fassadenkonstruktion (202) mit:
- einer Unterkonstruktion (204) zur Befestigung an einer tragenden Struktur eines Gebäudes; und
- einer Verkleidung (206), die an der Unterkonstruktion befestigbar ist;
wobei die Verkleidung keramische Fassadenplatten (207) aufweist, die an der Unterkonstruktion befestigbar sind;
wobei die Verkleidung Photovoltaik-Module (209) aufweist, die über die Unterkonstruktion an der tragenden Struktur befestigbar sind; und
wobei wenigstens ein Teil der Verkleidung als Fassadenverkleidung nach einem der Ansprüche 1 bis 9 oder nach Anspruch 11 ausgebildet ist.

13. Fassadensystem nach Anspruch 12, wobei wenigstens ein Teil der Photovoltaik-Module als Photovoltaik-Platten ausgebildet ist, die direkt an der Unterkonstruktion befestigbar sind;
wobei die Photovoltaik-Platten und die keramischen Fassadenplatten an der gleichen Unterkonstruktion befestigbar sind;
wobei die Photovoltaik-Platten und die keramischen Fassadenplatten mit den gleichen Befestigungsmitteln und Haltern an der Unterkonstruktion befestigbar sind; und
wobei die Photovoltaik-Platten und die keramischen Fassadenplatten austauschbar an der Unterkonstruktion gehalten sind.

14. Ein mit Photovoltaik-Modulen nachrüstbares Fassadensystem, aufweisend eine vorgehängte Fassadenkonstruktion mit:
- einer Unterkonstruktion zur Befestigung an einer tragenden Struktur eines Gebäudes; und
- einer Verkleidung, die an der Unterkonstruktion befestigbar ist; wobei die Verkleidung keramische Fassadenplatten aufweist, die an der Unterkonstruktion befestigbar sind;
wobei eine Befestigungsanordnung vorgesehen ist, mit der Photovoltaik-Module in montiertem Zustand des Fassadensystems nachträglich befestigbar sind.

15. Nachrüstbares Fassadensystem nach Anspruch 14, wobei die Befestigungsanordnung zweiteilige Befestigungen aufweist, wobei ein erster Befestigungsteil bei der Montage des Fassadensystems montierbar ist, und wobei ein zweiter Befestigungsteil nachträglich an dem ersten Befestigungsteil befestigbar ist, um ein Photovoltaik-Modul zu befestigen; und
wobei das erste Befestigungsteil als eine bi-funktionale Halterung der keramischen Fassadenplatten ausgebildet ist; und wobei ein erster Haltebereich zur Befestigung an der Unterkonstruktion vorgesehen ist, ein zweiter Haltebereich zum Halten der keramischen Fassadenplatten ausgebildet ist und ein dritter Haltebereich der Befestigung der Photovoltaik-Module dient; und
wobei das zweite Befestigungsteil mit dem dritten Haltebereich verbindbar ist und als Halterung für Photovoltaik-Module ausgebildet ist; und
wobei der dritte Haltebereich:
i) als ein Haltevorsprung ausgebildet ist, der in einem Fugenbereich zwischen zwei angrenzenden keramischen Fassadenplatten anordenbar ist und einen Kopplungsbereich für eine Verbindung mit dem zweiten Befestigungsteil aufweist; und wobei das zweite Befestigungsteil mit dem Kopplungsbereich verbindbar ist; oder
ii) als eine Profilierung ausgebildet ist, in der das zweite Befestigungsteil einhängbar ist.

16. Ein Fassadensystem (200), aufweisend eine vorgehängte Fassadenkonstruktion (202) mit:
- einer Unterkonstruktion (204) zur Befestigung an einer tragenden Struktur eines Gebäudes; und
- einer Verkleidung (206), die an der Unterkonstruktion befestigbar ist;
wobei die Verkleidung keramische Fassadenplatten (207) und Photovoltaik-Module (209) aufweist, die an der Unterkonstruktion befestigbar sind;
wobei die Unterkonstruktion Halterungen (289) aufweist; und
wobei die keramischen Fassadenplatten (207) und die Photovoltaik-Module (209) über die gleichen Halterungen gehalten sind; und
wobei, vorzugsweise, wenigstens ein Teil der Photovoltaik-Module mit einem Fassadenhalteprofil (400) nach einem der Anspruch 10 an der Unterkonstruktion gehalten ist.

17. Ein Verfahren (300) zur Befestigung von Photovoltaik-Modulen im Fassadenbereich, aufweisend die folgenden Schritte:
- Vorsehen (302) wenigstens einer keramischen Fassadenplatte;
- Befestigen (304) der wenigstens einen keramischen Fassadenplatte an einer Unterkonstruktion, die an einer tragenden Struktur eines Gebäudes befestigt ist;
- Vorsehen (306) wenigstens eines Photovoltaik-Moduls; und
- Befestigen (308) des wenigstens einen Photovoltaik-Moduls an der tragenden Struktur über die Unterkonstruktion;
wobei das Photovoltaik-Modul mit wenigstens einer Befestigungsvorrichtung an der Fassadenplatte befestigt wird und die wenigstens eine Befestigungsvorrichtung wenigstens einen Teil der Lasten des Photovoltaik-Moduls in die Fassadenplatte einleitet und die Fassadenplatte den wenigstens einen Teil der Lasten des Photovoltaik-Moduls in die Unterkonstruktion einleitet; und/oder
wobei Randbereiche der Photovoltaik-Module mit einem Fassadenhalteprofil gehalten werden, das einen ersten Haltebereich, der mit einer Aufnahme für die Photovoltaik-Module ausgebildet ist, und einen zweiten Haltebereich aufweist, der dem ersten Haltebereich gegenüber angeordnet ist und der mit einem Vorsprung in die Unterkonstruktion zur Befestigung der keramischen Fassadenplatte eingreift; und/oder
wobei das Befestigen des wenigstens einen Photovoltaik-Moduls nachträglich in montiertem Zustand des Fassadensystems erfolgt; und/oder
wobei die keramischen Fassadenplatten und die Photovoltaik-Module über die gleichen Halterungen gehalten werden.
